# FASCICULE DE BREVET EUROPEEN

(11) **EP 1 913 742 B1**
(45) Date de publication et mention de la délivrance du brevet: **25.02.2009**
(21) Numéro de dépôt: 06794311.8
(22) Date de dépôt: 09.08.2006
(51) Int. Cl.: H04L 12/56, H04W 84/04

(54) **PROCÉDÉ ET SYSTÈME DE TRANSMISSION DE MESSAGES À ÉTIQUETTES (TAGS) VIA AU MOINS UN RÉSEAU DE COMMUNICATION MOBILE**
VERFAHREN UND SYSTEM ZUR ÜBERTRAGUNG VON NACHRICHTEN MIT ETIKETTEN ÜBER MINDESTENS EIN MOBILES KOMMUNIKATIONSNETZ
METHOD AND SYSTEM FOR TRANSMITTING MESSAGES CONTAINING TAGS OVER AT LEAST ONE MOBILE COMMUNICATION NETWORK

(30) Priorité: 12.08.2005 FR 0508537
(43) Date de publication de la demande: 23.04.2008
(73) Titulaire: Sagem Mobiles, 75015 Paris (FR)
(72) Inventeur: PECQUEUR, Remi, F-92800 Puteaux (FR)
(74) Mandataire: Debay, Yves
(86) Numéro de dépôt international: PCT/FR2006/001928
(87) Numéro de publication internationale: WO 2007/020347

(56) Documents cités:
- HERRERO C ET AL: "Delivery of digital television to handheld devices" WIRELESS COMMUNICATION SYSTEMS, 2004, 1ST INTERNATIONAL SYMPOSIUM ON MAURITIUS 20-22 SEPT. 2004, PISCATAWAY, NJ, USA,IEEE, 20 septembre 2004 (2004-09-20), pages 240-244, XP010780751 ISBN: 0-7803-8472-5
- IVANKOVIC T: "Support of multimedia broadcast/multicast service in UMTS networks" TELECOMMUNICATIONS, 2005. CONTEL 2005. PROCEEDINGS OF THE 8TH INTERNATIONAL CONFERENCE ON ZAGREB, CROATIA JUNE 15-17, 2005, PISCATAWAY, NJ, USA,IEEE, 15 juin 2005 (2005-06-15), pages 91-98, XP010810294 ISBN: 953-184-081-4

## Description

La présente invention concerne le domaine de l'électronique et en particulier de la communication mobile, telle que la téléphonie mobile. L'invention concerne plus particulièrement la téléphonie mobile de troisième génération implémentant notamment la technologie GSM (« Global System for Mobile communication », selon la terminologie anglaise) et la technologie DVB-T/H (« Digital Video Broadcasting - Terrestrial/Handheld », selon la terminologie anglaise). La technologie GSM permet des communications entre deux terminaux mobiles communicants via l'échange de signaux vocaux ou l'échange de messages textuels (SMS, pour l'anglais « Short Message Service) véhiculés par des modulations de fréquences radio au sein d'au moins un réseau de téléphonie mobile. La technologie DVB-H permet l'envoi de signaux vidéo et audio par un fournisseur de contenu vers une pluralité de terminaux mobiles communicants présents au serin d'au moins un réseau de communication supportant cette technologie.

Un problème dans le domaine de la communication mobile concerne la bande passante et le coût nécessaires à la mise en oeuvre des services de messagerie permettant la participation des utilisateurs de terminaux mobiles communicants à des groupes d'échanges tels que des plébiscites, des groupes de discussion, des jeux, des forums, etc. En effet, les réseaux de téléphonie modernes proposent aux utilisateurs de participer à des groupes d'échanges similaires à ceux rencontrés sur Internet, comme les « weblogs » (ou blogs) par exemple. Cependant, ce type de service nécessite de connaître et de saisir le numéro auquel les messages doivent être envoyés ainsi que divers mots clés qui doivent être reconnus par les équipements des opérateurs de téléphonie mobile et/ou des fournisseurs de services. De même les équipements des opérateurs de téléphonie mobile et/ou des fournisseurs de services doivent ajouter un numéro de destinataire à chacun des messages envoyés aux participants du groupe d'échange, ce qui présente les inconvénients d'une forte utilisation de la bande passante au sein du réseau de téléphonie mobile couvrant les terminaux destinataires et d'un coût important pour les opérateurs de téléphonie mobile et/ou les fournisseurs de services.

Il est connu dans l'art antérieur, notamment par la demande de brevet EP 1 317 152 ou dans XP010780751 des procédés de transmission de messages SMS contenant , des étiquettes (Tags, selon la terminologie anglaise) permettant la mise en forme (formatage) des messages selon des paramètres déterminés sur les terminaux mobiles communicants à partir desquels ils ont été envoyés. Ces solutions permettent l'affichage, selon la mise en forme sélectionnée, d'un message SMS sur un terminal mobile communicant récepteur auquel le message a été envoyé. Le formatage du message reçu par les destinataires est déterminé par les tags sélectionnés par un utilisateur du terminal émetteur sur lequel ce message a été élaboré. Ces solutions permettent également l'enregistrement dans le terminal récepteur d'informations spécifiques envoyées par le terminal émetteur et identifiées par les tags contenus dans le message. Ce type de technologie faciliterait la mise en oeuvre des groupes d'échanges au sein des réseaux de téléphonie mobile mais ces solutions présentent les inconvénients de nécessiter l'élaboration et l'envoi de messages spécifiques à chacun des utilisateurs destinataires ou à un groupe de destinataires. Les numéros de téléphones des destinataires doivent être inclus dans les messages SMS envoyés aux destinataires via le canal GSM et un éventuel numéro utilisable pour répondre doit être également inclus dans le message ou dans un tag. Ces solutions ne peuvent pas être aisément appliqués à l'envoi de messages à une pluralité de destinataires d'un groupe d'échange. En effet, ces solutions nécessitent des envois, via le canal GSM, de messages SMS spécifiques des informations que l'on souhaite envoyer à chacun des terminaux destinataires et nécessitent l'inclusion d'un numéro de réponse spécifique pour permettre aux destinataires d'envoyer des messages SMS de réponse vers le terminal émetteur, via le canal GSM. Les inconvénients exposés précédemment ne sont donc pas résolus par ce type de solutions puisque les envois multiples, via le canal GSM, de messages SMS contenant des tags vers chaque destinataire utilisent une bande passante trop importante et présentent un coût trop important.

Dans ce contexte, il est intéressant de proposer une solution économique permettant, à moindre coût, de diffuser à un large nombre de destinataires, participant à des groupes d'échanges par exemple, des messages mis en forme grâce à des tags facilitant la réponse de ces destinataires

Un premier but de la présente invention est de pallier certains inconvénients de l'art antérieur en proposant un procédé permettant, à moindre coût, des échanges de messages entre au moins un serveur d'au moins un fournisseur de services et au moins un terminal mobile communicant d'au moins un destinataire participant à au moins un groupe d'échange, via au moins un canal d'au moins un réseau de téléphonie mobile.

Ce but est atteint par un procédé d'échange de messages, via au moins un canal de transmission d'au moins un réseau de communication mobile, entre au moins un terminal serveur et au moins un terminal mobile communicant d'un utilisateur participant à un groupe d'échange géré par le serveur, les messages contenant au moins une étiquette, dite tag, consistant en des données permettant au moins une mise en forme du message lors de l'interprétation du tag par des moyens de traitement de données des terminaux recevant les messages, caractérisé en ce qu'il comporte les étapes suivantes :
- élaboration d'au moins un message associé à des données représentatives de coordonnées d'appel d'au moins un terminal destinataire du réseau de communication mobile,
- incorporation d'au moins un tag dans le message, à partir d'une pluralité de tags prédéterminés, stockés dans des moyens de mémorisation du terminal émetteur, au moins un tag ainsi incorporé permettant d'identifier le groupe d'échange auquel le message est associé,
- choix, par le terminal émetteur, d'au moins un canal à utiliser pour la transmission du message, parmi une pluralité de canaux de transmission disponibles au sein du réseau de communication mobile, en fonction du nombre de destinataires et de paramètres relatifs aux terminaux destinataires,
- envoi du message via au moins un canal de transmission d'au moins un réseau de communication mobile.

Selon une autre particularité, le procédé comporte une étape préalable de définition d'une pluralité de tags et d'enregistrement, dans les moyens de mémorisation des différents terminaux, de ces tags consistant en des mots clés associés, au moins au sein des messages, à au moins un caractère ou symbole permettant l'identification de ces mots clés en tant que tags interprétables par les moyens de traitement de données des terminaux échangeant des messages au sein desquels les tags sont destinés à être incorporés.

Selon une autre particularité, l'étape de définition des tags est associée à une étape d'attribution d'au moins une fonction à chacun des tags, l'interprétation d'un tag résultant en l'exécution d'au moins une tâche correspondant à la fonction qui lui est attribuée parmi au moins les fonctions suivantes :
- définition de groupes d'échange consistant en des services tels que des jeux, des forums ou des loteries, auxquels des utilisateurs de terminaux mobiles communicants peuvent participer en se joignant à ce groupe d'échange,
- définition de formats de mise en forme des messages pour la présentation de leur contenu aux utilisateurs de terminaux mobiles communicants qui participent à un groupe d'échange,
- définition de méthodes de réponse aux messages reçus par les utilisateurs de terminaux mobiles communicants qui participent à un groupe d'échange,
- définition de choix associés à au moins une fonction d'au moins un autre tag, afin de proposer des actions à effectuer aux utilisateurs de terminaux mobiles communicants participant à un groupe d'échange.

Selon une autre particularité, l'étape d'incorporation d'au moins un tag dans le message comporte une étape d'incorporation d'au moins un tag correspondant à des coordonnées d'appel du terminal émetteur pour permettre une réponse du destinataire.

Selon une autre particularité, les étapes d'élaboration d'au moins un message et d'incorporation d'au moins un tag dans ce message sont mises en oeuvre par un utilisateur d'un terminal mobile communicant, grâce à des moyens de saisie et des moyens d'affichage du terminal mobile communicant et consistent, respectivement, en une étape de saisie du texte du message à envoyer et en une étape d'affichage d'une pluralité de tags stockés dans des moyens de mémorisation du terminal mobile communicant émetteur, suivie d'une sélection d'au moins un tag à incorporer dans le message.

Selon une autre particularité, les paramètres relatifs aux terminaux destinataires correspondent au moins aux coordonnées d'appel du terminal serveur et, d'autre part, en ce que l'étape de choix du canal à utiliser pour la transmission du message via le réseau de communication mobile consiste en une sélection automatique d'un canal GSM par les moyens de traitement et des moyens de communication du terminal mobile communicant émetteur, pour l'envoi par GSM du message vers le terminal serveur.

Selon une autre particularité, l'étape d'envoi du message vers le terminal serveur destinataire via un canal GSM du réseau de communication mobile est suivie des étapes suivantes, mises en oeuvre par le terminal serveur :
- réception du message par des moyens de communication du terminal serveur destinataire,
- lecture du message par les moyens de traitement du terminal serveur et interprétation des tags contenus dans le message,
- identification du groupe d'échange auquel le message est associé et mise en forme du message d'après les tags qu'il contient, puis enregistrement du contenu du message dans les moyens de mémorisation du terminal serveur.

Selon une autre particularité, l'étape d'enregistrement du contenu du message dans les moyens de mémorisation du terminal serveur consiste en une étape d'enregistrement du message, mis en forme d'après les tags qu'il contient, dans un fichier contenant l'ensemble des messages échangés dans le groupe d'échange identifié suite à l'étape d'identification.

Selon une autre particularité, l'étape d'enregistrement du message dans le fichier est suivie d'une étape de conversion du fichier sous la forme d'une page Internet, puis de publication de cette page Internet pour une consultation éventuelle par les utilisateurs participant au groupe d'échange correspondant.

Selon une autre particularité, les étapes d'élaboration du message et d'incorporation d'au moins un tag dans ce message sont mises en oeuvre, de façon automatique, par les moyens de traitement du terminal serveur, en réponse à un message envoyé par un terminal mobile communicant, grâce au moins à l'étape d'interprétation des tags contenus dans ce message et à l'étape d'identification du groupe d'échange auquel ce message envoyé par le terminal mobile communicant était associé.

Selon une autre particularité, les étapes d'élaboration du message et d'incorporation d'au moins un tag dans ce message sont mises en oeuvre par un utilisateur du terminal serveur, grâce à des moyens de saisie et des moyens d'affichage du terminal serveur et consistent, respectivement, en une étape de saisie du texte du message à envoyer et en une étape d'affichage d'une pluralité de tags stockés dans des moyens de mémorisation du terminal serveur, suivie d'une sélection d'au moins un tag à incorporer dans le message.

Selon une autre particularité, l'étape d'élaboration du message est mise en oeuvre par un utilisateur d'un terminal d'un fournisseur de contenu, grâce à des moyens de saisie et des moyens d'affichage du terminal du fournisseur de contenu et consiste en une saisie du texte du message à envoyer.

Selon une autre particularité, l'étape d'incorporation d'au moins un tag dans le message à envoyer aux destinataires est également mise en oeuvre par un utilisateur du terminal du fournisseur de contenu, grâce à des moyens de saisie et des moyens d'affichage du terminal du fournisseur de contenu et consiste en une étape d'affichage d'une pluralité de tags stockés dans des moyens de mémorisation du terminal du fournisseur de contenu, suivie d'une étape de sélection d'au moins un tag à incorporer dans le message, cette dernière étant suivie d'une étape d'envoi du message au terminal serveur, via au moins un réseau de communication, grâce à des moyens de communication du terminal du fournisseur de contenu.

Selon une autre particularité, l'étape d'élaboration du message, mise en oeuvre par un utilisateur d'un terminal du fournisseur de contenu, est suivie d'une étape d'envoi du message au terminal serveur, via au moins un réseau de communication, grâce à des moyens de communication du terminal du fournisseur de contenu, les moyens de traitement du terminal serveur mettant alors en oeuvre, de façon automatique, l'étape d'incorporation d'au moins un tag dans le message à envoyer aux destinataires.

Selon une autre particularité, les paramètres relatifs aux destinataires correspondent au moins aux coordonnées d'appel d'au moins un terminal mobile communicant et l'étape de choix du canal à utiliser pour l'envoi du message vers le terminal mobile communicant, via le réseau de communication mobile, est effectuée de façon automatique par les moyens de traitement du terminal serveur implémentant une méthode de sélection prédéterminée et consiste soit en une sélection d'un canal DVB-H, pour une diffusion du message par DVB-H, lorsque le nombre de destinataires est supérieur à un nombre prédéfini dans la méthode de sélection, soit en une sélection d'un canal GSM, pour un envoi du message par GSM, lorsque le nombre de destinataires est égal à ce nombre prédéfini, soit en une sélection d'un canal DVB-H et d'au moins un canal GSM, pour une double diffusion du message par DVB-H et GSM, lorsque le nombre de destinataires est supérieur à ce nombre prédéfini mais qu'au moins un terminal mobile communicant destinataire participant au groupe d'échange se trouve dans l'impossibilité de recevoir les signaux DVB-H diffusés dans les zones d'influence des antennes DVB-H.

Selon une autre particularité, l'étape d'envoi d'au moins un message, via un canal DVB-H, par le terminal serveur vers au moins un terminal mobile communicant est précédée d'une étape de création d'un fichier contenant l'ensemble des messages à diffuser vers les destinataires de l'ensemble des groupes d'échanges gérés par le terminal serveur, l'étape d'envoi d'au moins un message consistant alors en une diffusion de ce fichier sur un canal DVB-H permettant la diffusion de l'ensemble de ces messages vers les destinataires de l'ensemble des groupes d'échange gérés par le terminal serveur, les tags incorporés dans chacun des messages du fichier permettant aux moyens de traitement des terminaux mobiles communicants d'effectuer une étape de filtrage des messages pour ne présenter aux utilisateurs que le message correspondant au groupe d'échange auquel (auxquels) ils participent.

Selon une autre particularité, l'étape d'envoi d'au moins un message par le terminal serveur, vers au moins un terminal mobile communicant, via au moins un canal du réseau de communication mobile, est suivie des étapes suivantes, mises en oeuvre par chacun des terminaux mobiles communicants :
- réception de chacun des messages par des moyens de communication de chacun des terminaux mobiles communicants,
- lecture de chacun des messages par les moyens de traitement de chacun des terminaux mobiles communicants et interprétation des tags contenus dans ces messages,
- filtrage des messages par identification du groupe d'échange auquel chacun des messages est associé puis, lorsque le groupe d'échange identifié correspond à un groupe d'échange auquel le terminal mobile communicant destinataire participe, mise en forme du message d'après les tags qu'il contient.

Selon une autre particularité, l'étape de mise en forme du message d'après les tags qu'il contient est suivie d'une étape d'affichage, sur des moyens d'affichage du terminal mobile communicant, du message avec sa mise en forme définie par les tags, puis d'une éventuelle étape d'enregistrement du contenu du message dans les moyens de mémorisation du terminal mobile communicant lorsque son utilisateur le souhaite.

Selon une autre particularité, l'étape d'enregistrement du contenu du message dans les moyens de mémorisation du terminal mobile communicant est suivie d'une étape d'élaboration d'un message, mise en oeuvre grâce à l'interprétation des tags contenus dans chacun des messages correspondant à un groupe d'échange auquel participe le terminal mobile communicant, soit par saisie du texte du message par un utilisateur grâce aux moyens de saisie et aux moyens d'affichage du terminal mobile communicant, soit de façon automatique par les moyens de traitement du terminal mobile communicant, grâce aux informations fournies par les tags contenus dans le message reçu.

Selon une autre particularité, l'étape d'élaboration d'un message est suivie d'une étape d'incorporation d'au moins un tag dans ce message, mise en oeuvre soit de façon automatique par les moyens de traitement du terminal mobile communicant, soit par un utilisateur effectuant une sélection, grâce aux moyens de saisie du terminal mobile communicant, d'au moins un tag parmi une pluralité de tags stockés dans les moyens de mémorisation du terminal mobile communicant et affichés grâce aux moyens d'affichage du terminal mobile communicant.

Selon une autre particularité, les étapes d'envoi, via un canal DVB-H, d'au moins un message ou du fichier sont accompagnées d'une diffusion, via le canal DVB-H, d'une nouvelle liste de tags disponibles permettant aux terminaux mobiles communicants de mettre en oeuvre une étape de mise à jour de la pluralité de tags stockés dans leurs moyens de mémorisation.

Selon une autre particularité, le procédé comporte une étape préalable d'implantation d'un applicatif exécutable sur les moyens de traitement des terminaux, permettant la mise en oeuvre des différentes étapes du procédé et, en particulier, l'identification des tags au sein des messages échangés dans les groupes d'échange et l'interprétation de ces tags grâce à la consultation des moyens de mémorisation des différents terminaux stockant les différents tags associés à des fonctions définissant des tâches à exécuter par les moyens de traitement des terminaux.

Un second but de la présente invention est de pallier certains inconvénients de l'art antérieur en proposant un système de diffusion de messages, via au moins un réseau de communication mobile, vers des terminaux mobiles communicants de destinataires d'au moins un groupe d'échange.

Ce but est atteint par Système d'échange de messages, via au moins un canal de transmission d'au moins un réseau de communication mobile, entre au moins un terminal serveur et au moins un terminal mobile communicant d'un destinataire participant à un groupe d'échange géré par le serveur, les messages contenant au moins une étiquette, dite tag, consistant en des données permettant au moins une mise en forme du message, le système étant caractérisé en ce qu'il comporte au moins un terminal serveur et au moins un terminal mobile communicant comportant chacun:
- des moyens de traitement comportant :
   - des moyens d'interprétation des tags contenus dans les messages échangés par les terminaux participant aux différents groupes d'échange gérés par le serveur,
   - des moyens d'élaboration de messages,
   - des moyens d'incorporation de tags dans les messages élaborés,
   - des moyens de sélection d'au moins un canal à utiliser pour la transmission des messages vers les terminaux destinataires, en fonction du nombre de destinataires du message et de paramètres relatifs à ces terminaux,
- des moyens de mémorisation stockant une pluralité de tags interprétables par les terminaux participant aux différents groupes d'échange,
- des moyens de communication agencés pour établir des communications avec d'autres terminaux via au moins un canal d'au moins un réseau de communication et échanger des messages avec ces terminaux,

Selon une autre particularité, au moins le terminal serveur comporte des moyens de définition de tags permettant, d'une part, d'associer des mots clés avec au moins un caractère ou symbole, de façon à définir des tags interprétables par les moyens de traitement de données des terminaux et, d'autre part, d'attribuer à ces tags des fonctions définissant des tâches à exécuter par les moyens de traitement des terminaux lors de l'interprétation des tags, des moyens d'enregistrement du terminal serveur permettant le stockage de ces tags dans les moyens de mémorisation du terminal serveur, une tâche à exécuter étant définie par au moins une fonction parmi au moins les fonctions suivantes :
- définition de groupes d'échange consistant en des services tels que des jeux, des forums ou des loteries, auxquels des utilisateurs de terminaux mobiles communicants peuvent participer en se joignant à ce groupe d'échange,
- définition de formats de mise en forme des messages pour la présentation de leur contenu aux utilisateurs de terminaux mobiles communicants qui participent à un groupe d'échange,
- définition de méthodes de réponse aux messages reçus par les utilisateurs de terminaux mobiles communicants qui participent à un groupe d'échange,
- définition de choix associés à au moins une fonction d'au moins un autre tag, afin de proposer des actions à effectuer aux utilisateurs de terminaux mobiles communicants participant à un groupe d'échange.

Selon une autre particularité, les moyens d'interprétation des tags comportent des moyens de lecture des données constitutives des messages et des moyens d'identification des tags détectant, au sein de ces messages, les données représentatives du caractère ou symbole auquel les tags sont associés, de façon à identifier les tags au sein des messages échangés dans les groupes d'échange, des moyens de consultation des moyens de mémorisation des différents terminaux permettant aux moyens de traitement de ces terminaux d'exécuter les tâches définies par les fonctions attribuées aux différents tags.

Selon une autre particularité, les moyens d'incorporation de tags dans les messages élaborés comportent des moyens de conversion de coordonnées d'appel du terminal émetteur en au moins un tag permettant une réponse du destinataire.

Selon une autre particularité, les moyens d'élaboration de messages et les moyens d'incorporation de tags dans les messages consistent, dans le terminal mobile communicant, en des moyens de saisie et des moyens d'affichage permettant à un utilisateur, émetteur du message, de contrôler les moyens de traitement du terminal mobile communicant pour élaborer au moins un message à envoyer.

Selon une autre particularité, les moyens de sélection du canal à utiliser pour la transmission du message via le réseau de communication mobile comportent, dans le terminal mobile communicant, des moyens de sélection automatique d'un canal GSM contrôlant les moyens de traitement et les moyens de communication du terminal mobile communicant pour envoyer le message vers le terminal serveur.

Selon une autre particularité, les moyens de traitement du terminal serveur comportent, d'une part, des moyens de création, dans les moyens de mémorisation du terminal serveur, d'au moins un fichier correspondant à au moins un groupe d'échange défini par au moins un tag et des moyens d'enregistrer, dans ce fichier, l'ensemble des messages contenant ce tag et correspondant à ce groupe d'échange.

Selon une autre particularité, les moyens de traitement du terminal serveur comportent des moyens de conversion du fichier en une page Internet et des moyens de publication de cette page Internet pour une consultation éventuelle par les utilisateurs participant au groupe d'échange correspondant.

Selon une autre particularité, les moyens d'interprétation implantés dans le terminal serveur contrôlent, de façon automatique, les moyens d'élaboration de messages et les moyens d'incorporation de tags du terminal serveur, pour élaborer une réponse automatique définie au moins par une fonction attribuée à au moins un tag incorporé dans un message envoyé par un terminal mobile communicant, l'exécution d'au moins une tâche définie par cette fonction résultant en une création automatique d'un message prédéfini associé au groupe d'échange auquel le message envoyé par le terminal mobile communicant était associé.

Selon une autre particularité, les moyens d'élaboration de messages et les moyens d'incorporation de tags du terminal serveur comportent des moyens de saisie et des moyens d'affichage contrôlés par un utilisateur effectuant une saisie du texte du message à envoyer et une sélection, parmi la pluralité de tags stockés dans des moyens de mémorisation du terminal serveur, d'au moins un tag à incorporer dans le message.

Selon une autre particularité, le système comporte un terminal d'un fournisseur de contenu comportant des moyens de saisie et des moyens d'affichage permettant à un utilisateur de ce terminal du fournisseur de contenu de saisir le texte du message à envoyer.

Selon une autre particularité, le terminal du fournisseur de contenu comporte des moyens de communication permettant l'envoi du message élaboré au terminal serveur, via au moins un réseau de communication, les moyens de traitement du terminal serveur permettant l'incorporation d'au moins un tag dans le message à envoyer aux destinataires.

Selon une autre particularité, le terminal du fournisseur de contenu comporte également des moyens d'incorporation de tags dans les messages, les moyens de saisie et les moyens d'affichage du terminal du fournisseur de contenu permettant à l'utilisateur du terminal du fournisseur de contenu de sélectionner au moins un tag à incorporer dans le message, parmi une pluralité de tags stockés dans des moyens de mémorisation du terminal du fournisseur de contenu et affichés sur ses moyens d'affichage, des moyens de communication du terminal du fournisseur de contenu permettant l'envoi du message au terminal serveur, via au moins un réseau de communication.

Selon une autre particularité, les moyens de sélection, par le terminal serveur, du canal à utiliser pour l'envoi d'au moins un message vers au moins un terminal mobile communicant comportent des moyens d'évaluation des paramètres relatifs aux destinataires, de détermination du nombre de terminaux destinataires, de leurs coordonnées d'appel et leur accessibilité au sein du réseau de communication mobile et comportent des moyens de sélection automatique implémentant une méthode de sélection prédéterminée et permettant, en fonction du résultat obtenu par ces moyens d'évaluation, une sélection d'au moins un canal parmi soit un canal DVB-H, sélectionné lorsque le nombre de destinataires est supérieur à un nombre prédéfini dans la méthode de sélection, soit un canal GSM, sélectionné lorsque le nombre de destinataires est égal à ce nombre prédéfini, soit à la fois un canal DVB-H et au moins un canal GSM, lorsque le nombre de destinataires est supérieur à ce nombre prédéfini mais qu'au moins un terminal mobile communicant destinataire participant au groupe d'échange se trouve dans l'impossibilité de recevoir les signaux DVB-H diffusés dans les zones d'influence d'antennes DVB-H du réseau de communication mobile.

Selon une autre particularité, le terminal serveur comporte des moyens de création d'un fichier contenant l'ensemble des messages à diffuser vers les destinataires de l'ensemble des groupes d'échanges gérés par le terminal serveur et les moyens de communication de ce terminal serveur comportent des moyens de diffusion de ce fichier sur un canal DVB-H, permettant la diffusion de l'ensemble des messages du fichier vers l'ensemble des terminaux mobiles communicants participant aux différents groupes d'échanges gérés par le terminal serveur, les moyens d'interprétation de chacun de ces terminaux mobiles communicants filtrant les différents messages du fichier de façon à ne présenter à leur utilisateur que les messages correspondant au groupe d'échange auquel il participe.

Selon une autre particularité, les moyens d'interprétation du terminal mobile communicant identifient le groupe d'échange auquel correspond chacun des messages reçus et mettent en forme les messages correspondant à au moins un groupe d'échange auquel le terminal mobile communicant participe, d'après les tags contenus dans ces messages, des moyens d'affichage du terminal mobile communicant permettant un affichage du message avec sa mise en forme définie par les tags qu'il contient et un éventuel enregistrement du message dans les moyens de mémorisation du terminal mobile communicant lorsque son utilisateur le commande grâce aux moyens de saisie.

Selon une autre particularité, les moyens d'interprétation du terminal mobile communicant contrôlent, de façon automatique, les moyens d'élaboration de messages et les moyens d'incorporation de tags du terminal mobile communicant, pour élaborer une réponse automatique définie par une fonction attribuée à au moins tag incorporé dans un message envoyé par un terminal serveur, l'exécution d'au moins une tâche définie par cette fonction résultant en une création automatique d'un message prédéfini associé au groupe d'échange auquel le message envoyé par le terminal serveur était associé.

Selon une autre particularité, les moyens d'élaboration de messages et les moyens d'incorporation de tags du terminal mobile communicant comportent des moyens de saisie et des moyens d'affichage contrôlés par un utilisateur effectuant une saisie du texte du message à envoyer et une sélection, parmi la pluralité de tags stockés dans des moyens de mémorisation du terminal serveur, d'au moins un tag à incorporer dans le message.

Selon une autre particularité, les moyens de diffusion par DVB-H du terminal serveur comportent des moyens de diffusion de la pluralité de tags stockés dans ses moyens de mémorisation permettant aux moyens de traitement des terminaux mobiles communicants de mettre à jour la pluralité de tags stockés dans leurs moyens de mémorisation.

Selon une autre particularité, les différents moyens des terminaux sont mis en oeuvre par au moins un applicatif exécuté sur leurs moyens de traitement grâce à l'enregistrement, dans leurs moyens de mémorisation, de données dont au moins une partie est commune aux différents types de terminaux, de façon à assurer leur compatibilité et/ou leur complémentarité.

D'autres particularités et avantages de la présente invention apparaîtront plus clairement à la lecture de la description ci-après, faite en référence aux dessins annexés, dans lesquels :
- la figure 1 représente le système selon un mode de réalisation de l'invention,
- la figure 2 représente les étapes du procédé selon un mode de réalisation de l'invention.

La présente invention concerne un procédé et un système de transmission de messages (M) contenant des tags (T), via au moins un canal de transmission d'au moins un réseau (RT) de communication mobile. En particulier, l'invention concerne les réseaux de téléphonie mobile mais peut être appliquée à tous types de terminal pourvu de moyens de communication via un réseau de communication, bien que l'invention soit décrite en référence aux réseaux de communication mobile (sans fil). Par le terme de terminal mobile communicant, on entend tout type de terminal mobile pourvu de moyens de communication. Ainsi, l'invention est particulièrement adaptée aux téléphones mobiles modernes mais peut s'appliquer, par exemple, à un ordinateur portable ou un assistant personnel digital (PDA) munis d'une carte de communication par un réseau mobile. Par le terme de tags (T) (ou étiquettes), on entend des tags au sens des étiquettes connus dans certains langages de programmation, tels que par exemple le XML (« eXtensible Markup Language », selon la terminologie anglaise). Les tags sont de façon connue en soi des mots clés définis au préalable et associés à une étiquette permettant leur identification au sein d'un texte, de façon à permettre leur reconnaissance par un environnement logiciel capable d'interpréter ces tags grâce à une bibliothèque de tags prédéfinis. Les tags sont associés à des fonctions définissant une tâche à exécuter lors de leur interprétation au sein de l'environnement logiciel. Ces fonctions peuvent consister en de simples fonctions d'affichage mais peuvent également consister en l'exécution de tâches plus complexes par les terminaux mobiles communicants actuels qui présentent de nombreuses fonctionnalités. Ainsi, le destinataire d'un message (M) contenant des tags (T) pourra lire le message et les tags (T) permettront une mise en forme éventuelle du message, mais également une éventuelle exécution de fonctions permettant, par exemple, un remplissage automatique d'un formulaire de réponse au message (M) reçu ou une proposition de connexion automatique à un serveur pour une consultation d'informations supplémentaire par le destinataire grâce, par exemple, aux fonctionnalités WAP de son terminal (2) mobile communicant. L'invention concerne donc des transmissions, ou des échanges entre des terminaux communicant via au moins un réseau de téléphonie mobile, de messages (M) contenant des tags (T) permettant l'exécution de tâches par les terminaux recevant ces messages (M). En particulier, l'invention concerne l'utilisation de ces tags (T) pour la participation des utilisateurs de terminaux à des groupes d'échanges tels que ceux rencontrés aujourd'hui sur les réseaux de communication tels qu'Internet ou les réseaux similaires supportés par les réseaux de téléphonie mobile (WAP par exemple). Ces groupes d'échanges pourront consister, par exemple, en des jeux, des forums (ou des « weblogs », appelés également « blogs ») ou des loteries. L'utilisation des tags dans les échanges entre les terminaux des utilisateurs et avec les serveurs qui gèrent ces groupes d'échange permet avantageusement de formater les messages (M) échangés et de faciliter la participation des utilisateurs à ces groupes d'échange. Le système comporte au moins un terminal (1) serveur qui gère les échanges de messages avec et entre les utilisateurs participant aux groupes d'échange. Par le terme de terminal (1) serveur, on entend un système informatique d'un opérateur de téléphonie mobile qui gère les échanges de messages au travers d'au moins un réseau (RT) de téléphonie mobile de l'opérateur. Ce terminal (1) serveur est connecté, de façon connue en soi, à au moins une station de base (BTS, pour l'anglais « Base Transceiver Station ») contrôlant la redirection des données vers les différents relais et antennes (15, 16) du réseau (RT) de téléphonie mobile, pour permettre la transmission de ces données entre les terminaux connectés à ce réseau (RT). Par le terme de messages, on entend des messages courts de type SMS (« Short Message Service », selon la terminologie anglaise) mais il est évident que l'invention pourrait s'appliquer à d'autres types de messages échangés, tels que par exemple les MMS (« Multimedia Message Service », selon la terminologie anglaise). Les groupes d'échange pourront, de façon classique, être proposés par des fournisseurs de contenus et le système selon un mode de réalisation de l'invention prévoit un terminal (3) d'un fournisseur de contenu qui dialogue avec le terminal (1) serveur, par exemple via un réseau (RI) de type Internet pour proposer et/ou gérer les groupes d'échanges. Selon les accords passés entre les opérateurs de téléphonie mobile et les fournisseurs de contenus qui proposent les groupes d'échanges, le terminal (1) serveur et le terminal (3) du fournisseur de contenu pourront de façon équivalente gérer les différents tâches nécessaires à la mise en oeuvre de l'invention. On considèrera ainsi que les différents moyens décrits ci-après sont équivalents dans le terminal (1) serveur et dans le terminal (3) du fournisseur de contenu. Le terminal (3) d'un fournisseur de contenu comporte des moyens (30) de saisie de données tels que, par exemple un clavier et une souris ou un pavé alphanumérique. Des moyens (31) d'affichage du terminal (3) du fournisseur de contenu, tel qu'un écran, permettent à son utilisateur de consulter les informations reçues. Des moyens (34) de communication permettent les communications du terminal (3) du fournisseur de contenu avec le terminal (1) serveur, via au moins un réseau (RI) de communication, par exemple de type Internet. Des moyens (33) de mémorisation du terminal (3) du fournisseur de contenu permettent de stocker une pluralité de tags (T) destinés à être incorporés dans les messages (M) envoyés et des moyens (32) de traitement de données permettent de contrôler l'interopérabilité des différents moyens du terminal (3) du fournisseur de contenu décrits ci-dessus. Le terminal (3) du fournisseur de contenu pourra également comporter également des moyens d'incorporation de tags (T) dans les messages (M). De même, le terminal (1) serveur comporte des moyens (10) de saisie de données tels que, par exemple un clavier et une souris ou un pavé alphanumérique. Des moyens (11) d'affichage du terminal (1) serveur, tel qu'un écran, permettent à son utilisateur de consulter les informations reçues. Des moyens (14) de communication permettent les communications du terminal (1) serveur avec les autres terminaux (1, 3), via au moins un réseau de communication, de type Internet (RI) et/ou de téléphonie mobile (RT). Des moyens (13) de mémorisation du terminal (1) serveur permettent de stocker une pluralité de tags (T) destinés à être incorporés dans les messages (M) envoyés et des moyens (12) de traitement de données permettent de contrôler l'interopérabilité des différents moyens du terminal (1) serveur décrits ci-dessus. Enfin, le système comporte au moins un terminal (2) mobile communicant qui comporte des moyens (20) de saisie de données tels que, par exemple, un pavé alphanumérique. Des moyens (21) d'affichage du terminal (2) mobile communicant, tel qu'un écran, permettent à son utilisateur de consulter les informations reçues. Des moyens (24) de communication permettent les communications du terminal (2) mobile communicant avec le terminal (1) serveur et les autres terminaux (2) mobiles communicants, via au moins un réseau (RT) de téléphonie mobile. Des moyens (23) de mémorisation du terminal (2) mobile communicant permettent de stocker une pluralité de tags (T) destinés à être incorporés dans les messages (M) envoyés et des moyens (22) de traitement de données permettent de contrôler l'interopérabilité des différents moyens du terminal (2) mobile communicant décrits ci-dessus.

Les différents tags (T) destinés à être interprétés par les terminaux participant aux groupes d'échanges sont créés pour définir des tâches à exécuter et faciliter les échanges dans les groupes d'échanges. Par exemple, le terminal (1) serveur pourra comporter des moyens de définition de tags permettant d'associer des mots clés avec au moins un caractère ou symbole. Ces mots clés associés à au moins un caractère seront alors reconnus comme des tags (T) à interpréter par les terminaux qui liront les messages (M) dans lesquels ils auront été incorporés. Par exemple, les tags seront identifiés grâce à la présence des caractères < et > de part et d'autre du mot clé qui les définit. Ainsi, la lecture de la chaîne de caractères <loto> dans un message reçu par un terminal permettra à ce dernier de reconnaître automatiquement que le message reçu concerne un jeu de loterie. Les moyens de définition de tags permettent, d'une part, de définir des tags (T) interprétables par les moyens (12, 22) de traitement de données des terminaux (1, 2) et, d'autre part, d'attribuer à ces tags (T) des fonctions définissant des tâches à exécuter par les moyens (12, 22) de traitement des terminaux (1, 2) lors de l'interprétation des tags (T). Des moyens d'enregistrement du terminal (1) serveur permettront le stockage de ces tags (T) prédéfinis dans les moyens (13) de mémorisation du terminal (1) serveur. Les tâches à exécuter pourront, par exemple, consister en au moins une des fonctions suivantes :
- définition de groupes d'échange consistant en des services tels que des jeux, des forums ou des loteries, auxquels des utilisateurs de terminaux (2) mobiles communicants peuvent participer en se joignant à ce groupe d'échange,
- définition de formats de mise en forme des messages (M) pour la présentation de leur contenu aux utilisateurs de terminaux (2) mobiles communicants qui participent à un groupe d'échange,
- définition de méthodes de réponse aux messages (M) reçus par les utilisateurs de terminaux (2) mobiles communicants qui participent à un groupe d'échange,
- définition de choix associés à au moins une fonction d'au moins un autre tag (T), afin de proposer des actions à effectuer aux utilisateurs de terminaux (2) mobiles communicants participant à un groupe d'échange.

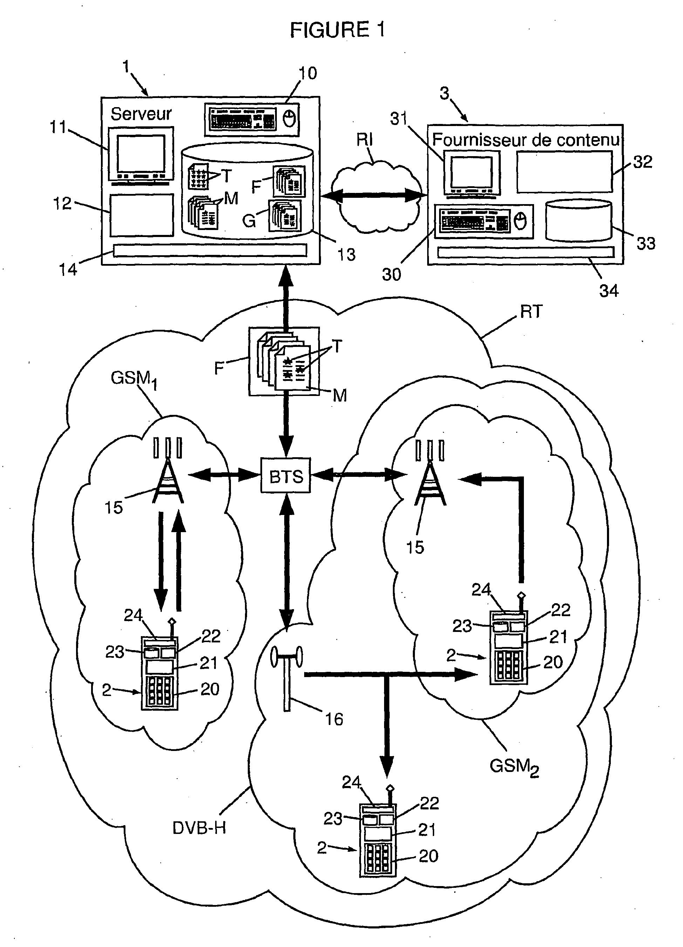

Les réseaux de téléphonie mobile modernes comportent des antennes (15) de type GSM (« Global System for Mobile communication », selon la terminologie anglaise) couvrant des zones (GSM₁, GSM₂, figure 1) d'influence dans lesquelles les signaux GSM peuvent être captés et permettant les communications des utilisateurs entre eux, mais également des antennes (16) de type DVB-H (« Digital Video Broadcasting - Handheld », selon la terminologie anglaise) couvrant des zones (DVB-H, figure 1) d'influence dans lesquelles les signaux DVB-H peuvent être captés et permettant la diffusion de signaux vidéos vers les terminaux de utilisateurs du réseau. Les réseaux de téléphonie mobile permettent donc des communications de différents types entre des terminaux (2) mobiles communicants. L'invention permet à des utilisateurs de terminaux (2) mobiles communicants de participer à des groupes d'échanges, par exemple, sur Internet, grâce à des messages taggés échangés au travers d'un réseau de téléphonie mobile. Les terminaux (2) mobiles communicants du système selon un mode de réalisation de l'invention peuvent consister en des téléphones mobiles mais également en des ordinateurs portables pourvus de moyens de communication par téléphonie mobile ou encore des assistants personnels digitaux (PDA, pour l'anglais « Personal Digital Assistant ») également pourvus de tels moyens.

Les échanges de messages (M) contenant des tags (T) entre au moins un terminal (1) serveur et au moins un terminal (2) mobile communicant d'un destinataire participant à un groupe d'échange géré par le serveur (1), nécessitent l'existence de moyens compatibles et/ou complémentaires dans le terminal (1) serveur et le terminal (2) mobile communicant, de façon à ce que les tags soient correctement interprétés par l'un et l'autre de ces terminaux. Par exemple, un applicatif implanté et exécuté dans le terminal (1) serveur et le terminal (2) mobile communicant, permettra de gérer les différentes tâches nécessaires à la mise en oeuvre de l'invention. Le terminal (1) serveur et le terminal (2) mobile communicant comportent des moyens (12, 22) de traitement comportant des moyens d'interprétation des tags (T) contenus dans les messages (M) échangés par les terminaux (1, 2) participant aux différents groupes d'échange gérés par le serveur (1). Des moyens d'élaboration de messages (M) permettent de créer un message (M) à envoyer, en fonction du contenu du groupe d'échange auquel ce message (M) correspond et selon la volonté de l'utilisateur et/ou éventuellement de façon automatique, en fonction des données contenues d'un message (M) préalablement reçu par le terminal qui élabore ce message. Des moyens d'incorporation de tags (T) permettent d'ajouter des tags dans les messages (M) élaborés par les terminaux. Le terminal (1) serveur et le terminal (2) mobile communicant comportent des moyens (13, 23) de mémorisation stockant une pluralité de tags (T) interprétables par les terminaux participant aux différents groupes d'échange. De façon classique, les terminaux comportent des moyens (14, 24) de communication agencés pour établir des communications avec d'autres terminaux (1, 2, 3) via au moins un canal (GSM₁, GSM₂, DVB₁) d'au moins un réseau (RT, RI) de communication et échanger des messages (M) avec ces terminaux (1, 2, 3). De façon plus particulière, le terminal (1) serveur et le terminal (2) mobile communicant comportent également des moyens de sélection d'au moins un canal à utiliser pour la transmission des messages (M) vers les terminaux (1, 2) destinataires, en fonction du nombre de destinataires du message (M) et de paramètres relatifs à ces terminaux. Ainsi, le choix du canal de transmission utilisé dépend du terminal qui envoie un message (M) à un moment donné et des terminaux destinataires auxquels ce message (M) doit être envoyé.

Les moyens d'interprétation des tags (T) présents dans les différents terminaux du système comportent des moyens de lecture des données constitutives des messages (M) et des moyens d'identification des tags (T) détectant, au sein de ces messages, les données représentatives du caractère ou symbole auquel les tags sont associés, de façon à identifier les tags (T) au sein des messages (M) échangés dans les groupes d'échanges. Des moyens de consultation des moyens (13, 23, 33) de mémorisation des différents terminaux (1, 2, 3) permettent alors aux moyens (12, 22, 32) de traitement de ces terminaux (1, 2, 3) d'exécuter les tâches définies par les fonctions attribuées aux différents tags (T). Pour la participation à certains groupes d'échanges, il peut être intéressant de proposer des tags qui permettent à un terminal recevant un message (M) d'identifier le terminal qui avait émis ce message (M). Ainsi, un tag (T) particulier pourra permettre de répondre automatiquement à un message en identifiant l'émetteur. Par exemple, lors de la participation d'un utilisateur d'un terminal (2) mobile communicant à un weblog, les messages envoyés par le terminal (1) serveur pourront comporter un tag (T) identifiant le weblog et les coordonnées d'appel du terminal (1) serveur. Ainsi, les différents utilisateurs participant à différents weblogs enverront leurs messages au terminal (1) serveur grâce à des coordonnées d'appel uniques et le terminal (1) serveur effectuera le tri des messages reçus grâce au tag (T) identifiant le weblog auquel correspond chacun des messages (M). Les moyens d'incorporation de tags (T) dans les messages (M) élaborés pourront donc comporter, par exemple, des moyens de conversion de coordonnées d'appel du terminal (1, 2) émetteur en au moins un tag permettant une réponse du destinataire. Les moyens (12) de traitement du terminal (1) serveur comportent, d'une part, des moyens de création, dans les moyens (13) de mémorisation du terminal (1) serveur, d'au moins un fichier (G) correspondant à au moins un groupe d'échange défini par au moins un tag (T). Les moyens (12) de traitement du terminal (1) serveur comportent également des moyens d'enregistrer, dans ce fichier (G), l'ensemble des messages (M) contenant le tag (T) correspondant au groupe d'échange auquel ce fichier (G) correspond. De plus, les moyens (12) de traitement du terminal (1) serveur peuvent, dans un mode de réalisation de l'invention, comporter des moyens de conversion du fichier (G) en une page Internet et des moyens de publication de cette page Internet pour une consultation éventuelle par les utilisateurs participant au groupe d'échange correspondant. D'autre part, le terminal (1) serveur comporte des moyens de création d'un fichier (F) contenant l'ensemble des messages (M) à diffuser vers les destinataires de l'ensemble des groupes d'échanges gérés par le terminal (1) serveur. Le terme de fichiers (F ou G) est utilisé ici dans son sens générique en référence aux systèmes informatiques et l'on entend par ce terme n'importe quel format de fichier de données car l'invention repose sur les tags (T) qu'il contient et pourrait être utilisée avec n'importe quel fichier dans la mesure où ce dernier est lisible par le terminal pour accéder aux tags qu'il contient. Ces fichiers pourront être au format SMS pour permettre l'utilisation de l'applicatif existant dans les terminaux (2) mobiles communicants. De plus, ces fichiers pourront eux-mêmes inclure des tags (T) permettant, par exemple, la reconnaissance, le filtrage et l'affichage des messages (M) taggés qu'ils contiennent par les terminaux destinataires. Ainsi, lorsque le terminal (1) serveur reçoit des messages correspondant à un groupe d'échange donné, ces messages peuvent enregistrés dans le fichier (G) correspondant, qui peut ensuite être converti en un fichier (F) à diffuser aux utilisateurs participant à ce groupe d'échange. Les moyens (14) de communication de ce terminal (21) serveur comportent des moyens de diffusion de ce fichier (F) sur un canal DVB-H, permettant la diffusion de l'ensemble des messages (M) du fichier vers l'ensemble des terminaux (2) mobiles communicants participant aux différents groupes d'échanges gérés par le terminal (1) serveur. Les moyens d'interprétation de chacun de ces terminaux (2) mobiles communicants filtrent alors les différents messages (M) du fichier (F) de façon à ne présenter à leur utilisateur que les messages (M) correspondant au groupe d'échange auquel il participe. Les moyens d'interprétation du terminal (2) mobile communicant identifient le groupe d'échange auquel correspond chacun des messages (M) reçus et mettent en forme les messages (M) correspondant à au moins un groupe d'échange auquel le terminal (2) mobile communicant participe, d'après les tags contenus dans ces messages, des moyens (21) d'affichage du terminal (2) mobile communicant permettant un affichage du message (M) avec sa mise en forme définie par les tags (T) qu'il contient et un éventuel enregistrement du message (M) dans les moyens (23) de mémorisation du terminal (2) mobile communicant lorsque son utilisateur le commande grâce aux moyens (20) de saisie. De plus, les moyens d'interprétation du terminal (2) mobile communicant peuvent, dans un mode de réalisation de l'invention, contrôler de façon automatique les moyens d'élaboration de messages (M) et les moyens d'incorporation de tags (T) du terminal (2) mobile communicant. En effet, lorsqu'un message (M) envoyé par le terminal (1) serveur contient un ou plusieurs tag(s) (T) définissant une fonction de création automatique d'un message prédéfini, les moyens d'interprétation du terminal (2) mobile communicant élaborent une réponse automatique définie par cette fonction. D'autre part, les moyens (20) de saisie et les moyens (21) d'affichage du terminal (2) mobile communicant constituent des moyens d'élaboration de messages (M) et des moyens d'incorporation de tags (T), en permettant à un utilisateur de saisir un texte du message (M) à envoyer et de sélectionner, parmi la pluralité de tags (T) stockés dans des moyens (23) de mémorisation du terminal (2) mobile communicant, au moins un tag (T) à incorporer dans le message.

De même, les moyens d'interprétation implantés dans le terminal (1) serveur peuvent contrôler de façon automatique les moyens d'élaboration de messages (M) et les moyens d'incorporation de tags (T) du terminal (1) serveur, pour élaborer une réponse automatique définie au moins par une fonction attribuée à au moins tag (T) incorporé dans un message (M) envoyé par un terminal (2) mobile communicant. Cette réponse automatique du terminal (1) peut, dans un mode de réalisation de l'invention, être également définie par d'autres fonctions définies par des méthodes établies au préalable et enregistrées dans les moyens (13) de mémorisation du terminal (1) serveur. Ainsi, un message prédéfini, associé au groupe d'échange auquel le message (M) envoyé par le terminal (2) mobile communicant était associé, peut être envoyé à un ou plusieurs terminaux mobiles communicants (participant ou non à ce groupe d'échange) et/ou au terminal (3) du fournisseur de contenu. Dans un mode de réalisation de l'invention, les moyens (10) de saisie et les moyens (11) d'affichage du terminal (1) serveur permettent à un utilisateur de contrôler les moyens d'élaboration de messages (M) et les moyens d'incorporation de tags (T) et d'effectuer une saisie du texte du message (M) à envoyer et une sélection, parmi la pluralité de tags (T) stockés dans des moyens (13) de mémorisation du terminal (1) serveur, d'au moins un tag (T) à incorporer dans le message.

Dans le terminal (2) mobile communicant, les moyens de sélection du canal à utiliser pour la transmission du message (M) via le réseau (RT) de téléphonie mobile, comportent des moyens de sélection automatique d'un canal permettant l'envoi d'un message de type SMS, par exemple un canal GSM. Ces moyens de sélection automatique d'un canal GSM contrôlent les moyens (22) de traitement et les moyens (24) de communication du terminal (2) mobile communicant pour communiquer avec une antenne (15) GSM dans la zone d'influence (GSM₁, GSM₂) de laquelle ce terminal se trouve, de façon à envoyer le message (M) vers le terminal (1) serveur. Par contre, les réseaux de téléphonie mobile modernes permettent aux opérateurs d'envoyer des données vers plusieurs terminaux (2) mobiles communicants en même temps. Les moyens de sélection, par le terminal (1) serveur, du canal à utiliser pour l'envoi d'au moins un message (M) vers au moins un terminal (2) mobile communicant comportent des moyens d'évaluation des paramètres relatifs aux destinataires, de détermination du nombre de terminaux destinataires, de leurs coordonnées d'appel et leur accessibilité au sein du réseau (RT) de téléphonie mobile. Ainsi, en fonction du nombre de terminaux destinataires d'un message (M) donné et de leur position au sein du réseau, c'est-à-dire des antennes avec lesquelles ils peuvent communiquer, ces moyens de sélection pourront choisir un ou plusieurs canal (ou canaux) pour l'envoi du message (M). En fonction du résultat obtenu par ces moyens d'évaluation, les moyens de sélection pourront sélectionner, en fonction d'une méthode de sélection prédéterminée et implémentée dans ces moyens de sélection, soit un canal DVB-H lorsque le nombre de destinataires est supérieur à un nombre prédéfini dans la méthode de sélection, soit un canal GSM lorsque le nombre de destinataires est égal à ce nombre prédéfini, soit à la fois un canal DVB-H et au moins un canal GSM lorsque le nombre de destinataires est supérieur au nombre prédéfini mais qu'au moins un terminal (2) mobile communicant destinataire participant au groupe d'échange se trouve dans l'impossibilité de recevoir les signaux DVB-H diffusés dans les zones d'influence (DVB_{H}) d'antennes (16) DVB-H du réseau (RT) de téléphonie mobile. Par exemple, le nombre prédéfini dans la méthode de sélection implémentée dans les moyens de sélection du terminal (1) serveur pourra être égale à un et lorsqu'un des terminaux (2) mobiles communicants destinataires n'implémente pas la technologie DVB-H, les moyens de sélection permettront l'envoi du message (M) à ce terminal via un canal GSM et l'envoi aux autres terminaux via un canal DVB-H. A l'inverse, par exemple, lorsque les moyens d'évaluation auront déterminé qu'un message (M) donné ne doit être envoyé qu'à un seul destinataire mais que celui-ci ne se trouve pas dans une zone d'influence (GSM₁, GSM₂) d'une antenne (15) GSM, les moyens de sélection permettront la sélection d'un canal DVB-H pour l'envoi du message (M) vers cet unique destinataire inaccessible par les canaux GSM. De plus, les moyens de diffusion par DVB-H du terminal (1) serveur peuvent, dans un mode de réalisation de l'invention, comporter des moyens de diffusion de la pluralité de tags stockés dans ses moyens (23) de mémorisation. Ainsi, le terminal (1) serveur peut diffuser dans le réseau (RT) de téléphonie mobile, des nouveaux tags (T) définissant de nouvelles fonctions à exécuter par les terminaux destinataires. Cette diffusion des nouveaux tags permet aux moyens (22) de traitement des terminaux (2) mobiles communicants de mettre à jour la pluralité de tags stockés dans leurs moyens (23) de mémorisation, par exemple en exécutant une tâche définie par une fonction de mise à jour attribuée à un tag (T) incorporé dans le message contenant les nouveaux tags (T) et déjà présent dans les moyens de mémorisation des terminaux destinataires. De même que pour l'envoi des messages (M) à un terminal n'implémentant pas la technologie DVB-H, les moyens de sélection permettront la mise à jour des tags sur un tel terminal, grâce à l'envoi de messages (M) via un canal GSM.

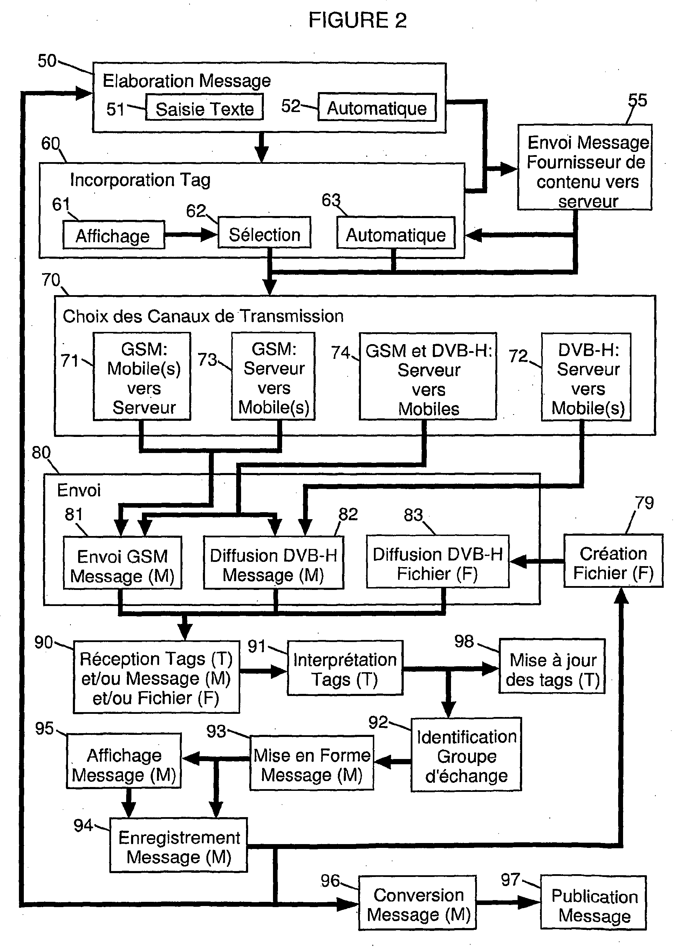

Les différents moyens décrits ci-dessus permettent aux terminaux du système selon l'invention de mettre en oeuvre le procédé d'échange de messages (M) contenant au moins un tag (T) représenté sur la figure 2. Ce procédé comporte, dans un mode de réalisation de l'invention, une étape préalable d'implantation d'un applicatif exécutable sur les moyens (12, 22) de traitement des terminaux (1, 2), permettant la mise en oeuvre des différentes étapes du procédé et, en particulier, l'identification des tags (T) au sein des messages (M) échangés dans les groupes d'échange et l'interprétation de ces tags (T) grâce à la consultation des moyens (13, 23) de mémorisation des différents terminaux (1, 2) stockant les différents tags (T) associés à des fonctions définissant des tâches à exécuter par les moyens (12, 22) de traitement des terminaux (1, 2). Dans un mode réalisation de l'invention, le procédé comporte également une étape préalable de définition d'une pluralité de tags (T) et d'enregistrement, dans les moyens (13, 23) de mémorisation des différents terminaux (1, 2), de ces tags (T) consistant en des mots clés associés, au moins au sein des messages (M), à au moins un caractère ou symbole permettant l'identification de ces mots clés en tant que tags (T) interprétables par les moyens (12, 22) de traitement de données des terminaux (1, 2) échangeant des messages (M) au sein desquels les tags (T) sont destinés à être incorporés. Cette étape de définition des tags (T) est associée à une étape d'attribution d'au moins une fonction à chacun des tags (T), parmi les fonctions décrites précédemment de façon non limitative.

Dans les différents modes de réalisation détaillés ci-après, le procédé selon l'invention comporte au moins les étapes suivantes, qui peuvent être mises en oeuvre soit par un terminal (1) serveur, soit par un terminal (2) mobile communicant, en réponse à un message (M) reçu ou de façon spontanée :
- élaboration (50) d'au moins un message (M) associé à des données représentatives de coordonnées d'appel d'au moins un terminal (1, 2) destinataire du réseau (RT) de téléphonie mobile,
- incorporation (60) d'au moins un tag (T) dans le message (M), à partir d'une pluralité de tags prédéterminés, stockés dans des moyens (13, 23) de mémorisation du terminal (2, 1) émetteur, au moins un tag (T) ainsi incorporé permettant d'identifier le groupe d'échange auquel le message (M) est associé,
- choix (70), par le terminal (2, 1) émetteur, d'au moins un canal à utiliser pour la transmission du message (M), parmi une pluralité de canaux de transmission disponibles au sein du réseau (RT) de téléphonie mobile, en fonction du nombre de destinataires et de paramètres relatifs aux terminaux (1, 2) destinataires,
- envoi (80) du message (M) via au moins un canal de transmission d'au moins un réseau (RT) de téléphonie mobile.

Dans un mode de réalisation de l'invention, l'étape d'incorporation (60) d'au moins un tag (T) dans le message (M) comporte une étape d'incorporation d'au moins un tag (T) correspondant à des coordonnées d'appel du terminal (1, 2) émetteur pour permettre une réponse du destinataire. Les étapes d'élaboration (50) d'au moins un message (M) et d'incorporation (60) d'au moins un tag (T) dans ce message (M) peuvent être mises en oeuvre par un utilisateur d'un terminal (2) mobile communicant, grâce à des moyens (20) de saisie et des moyens (21) d'affichage du terminal (2) mobile communicant. Ces étapes consistent alors, respectivement, en une étape de saisie (51) du texte du message (M) à envoyer et en une étape d'affichage (61) d'une pluralité de tags (T) stockés dans des moyens (23) de mémorisation du terminal (2) mobile communicant émetteur, suivie d'une sélection (62) d'au moins un tag (T) à incorporer dans le message. Dans une autre variante de réalisation, ces étapes d'élaboration (50) du message (M) et d'incorporation (60) d'au moins un tag (T) dans ce message (M) peuvent être mises en oeuvre de façon automatique (52, 63), par les moyens (12) de traitement du terminal (1) serveur, en réponse à un message (M) envoyé par un terminal (2) mobile communicant. Cette mise en oeuvre automatique nécessite au moins l'étape d'interprétation (91) des tags (T) contenus dans ce message et l'étape d'identification (92) du groupe d'échange auquel ce message (M) envoyé par le terminal (2) mobile communicant était associé. Dans une autre variante de réalisation, ces étapes d'élaboration (50) du message (M) et d'incorporation (60) d'au moins un tag (T) dans ce message (M) peuvent également être mises en oeuvre par un utilisateur du terminal (1) serveur, grâce à des moyens (10) de saisie et des moyens (11) d'affichage du terminal (1) serveur. Ces étapes consistent alors, respectivement, en une étape de saisie (51) du texte du message (M) à envoyer et en une étape d'affichage (61) d'une pluralité de tags (T) stockés dans des moyens (13) de mémorisation du terminal (1) serveur, suivie d'une sélection (62) d'au moins un tag (T) à incorporer dans le message.

Dans une autre variante de réalisation, l'étape d'élaboration (50) du message (M) peut être mise en oeuvre par un utilisateur d'un terminal (3) d'un fournisseur de contenu, grâce à des moyens (30) de saisie et des moyens (31) d'affichage du terminal (3) du fournisseur de contenu et consiste en une saisie (51) du texte du message (M) à envoyer. L'étape d'incorporation (60) d'au moins un tag (T) dans le message (M) à envoyer aux destinataires peut être également mise en oeuvre par un utilisateur du terminal (3) du fournisseur de contenu, grâce à des moyens (30) de saisie et des moyens (31) d'affichage du terminal (3) du fournisseur de contenu et consiste en une étape d'affichage (61) d'une pluralité de tags (T) stockés dans des moyens (33) de mémorisation d du terminal (3) du fournisseur de contenu, suivie d'une étape de sélection (62) d'au moins un tag (T) à incorporer dans le message (M), cette dernière étant suivie d'une étape d'envoi (55) du message (M) au terminal (1) serveur, via au moins un réseau (RI) de communication, grâce à des moyens (34) de communication du terminal (3) du fournisseur de contenu. Dans une autre variante de réalisation, l'étape d'élaboration (50) du message (M), mise en oeuvre par un utilisateur d'un terminal (3) du fournisseur de contenu, est suivie d'une étape d'envoi (55) du message (M) au terminal (1) serveur, via au moins un réseau (RI) de communication, grâce à des moyens (34) de communication du terminal (3) du fournisseur de contenu, les moyens (12) de traitement du terminal (1) serveur mettant alors en oeuvre, de façon automatique (63), l'étape d'incorporation (60) d'au moins un tag (T) dans le message (M) à envoyer aux destinataires.

Les paramètres relatifs aux terminaux destinataires, pris en compte lors de l'étape de choix du canal de transmission du message (M), correspondent au moins aux coordonnées d'appel du terminal (1) serveur. Cette étape de choix (70) du canal consiste en une sélection automatique (71) d'un canal GSM par les moyens (22) de traitement et des moyens (24) de communication du terminal (2) mobile communicant émetteur, pour l'envoi (81) par GSM du message (M) vers le terminal (1) serveur. Dans une autre variante de réalisation, les paramètres relatifs aux destinataires correspondent au moins aux coordonnées d'appel d'au moins un terminal (2) mobile communicant. L'étape de choix (70) du canal à utiliser pour l'envoi (80) du message (M) vers le terminal (2) mobile communicant, via le réseau (RT) de téléphonie mobile, est alors effectuée de façon automatique par les moyens (12) de traitement du terminal (1) serveur. Ces moyens de traitement comportent des moyens de sélection implémentant une méthode de sélection prédéterminée permettant soit une sélection (72) d'un canal DVB-H, pour une diffusion (82) du message par DVB-H, lorsque le nombre de destinataires est supérieur à un nombre prédéfini dans la méthode de sélection, soit une sélection (73) d'un canal GSM, pour un envoi (81) du message par GSM, lorsque le nombre de destinataires est égal à ce nombre prédéfini, soit une sélection (74) d'un canal DVB-H et d'au moins un canal GSM, pour une double diffusion (81, 82) du message (M) par DVB-H et GSM, lorsque le nombre de destinataires est supérieur à ce nombre prédéfini mais qu'au moins un terminal (2) mobile communicant destinataire participant au groupe d'échange se trouve dans l'impossibilité de recevoir les signaux DVB-H diffusés dans les zones d'influence (DVB₁) des antennes (16) DVB-H.

Dans une autre variante de réalisation, l'étape d'envoi (80) d'au moins un message (M), via un canal DVB-H, par le terminal (1) serveur vers au moins un terminal (2) mobile communicant est précédée d'une étape de création (79) d'un fichier (F) contenant l'ensemble des messages (M) à diffuser vers les destinataires de l'ensemble des groupes d'échanges gérés par le terminal (1) serveur, l'étape d'envoi (80) d'au moins un message (M) consistant alors en une diffusion (83) de ce fichier (F) sur un canal DVB-H permettant la diffusion de l'ensemble de ces messages (M) vers les destinataires de l'ensemble des groupes d'échange gérés par le terminal (1) serveur, les tags (T) incorporés dans chacun des messages (M) du fichier (F) permettant aux moyens (22) de traitement des terminaux (2) mobiles communicants d'effectuer une étape de filtrage des messages (M) pour ne présenter aux utilisateurs que le(s) message(s) (M) correspondant au(x) groupe(s) d'échange auquel (auxquels) ils participent. Dans une autre variante de réalisation, ces étapes d'envoi (80), via un canal DVB-H, d'au moins un message (M) ou du fichier (F) sont accompagnées d'une diffusion (84), via le canal DVB-H, d'une nouvelle liste de tags disponibles permettant aux terminaux (2) mobiles communicants de mettre en oeuvre une étape de mise à jour (98) de la pluralité de tags stockés dans leurs moyens (23) de mémorisation.

Lorsqu'au moins un terminal (2) mobile communicant met en oeuvre l'étape d'envoi (80) du message (M) vers le terminal (1) serveur destinataire, une étape de réception (90) du message (M) par des moyens (14) de communication du terminal (1) serveur destinataire permet la mise en oeuvre d'une étape de lecture du message (M) par les moyens (12) de traitement du terminal (1) serveur, puis d'une étape d'interprétation (91) des tags (T) contenus dans le message (M). Ensuite, Cette étape d'interprétation (91) des tags (T) permet une étape d'identification (92) du groupe d'échange auquel le message (M) est associé, puis une étape de mise en forme (93) du message (M) d'après les tags qu'il contient, suivie éventuellement d'une étape d'enregistrement (94) du contenu du message (M) dans les moyens (13) de mémorisation du terminal (1) serveur. Cette étape d'enregistrement (94) du contenu du message (M) dans les moyens (13) de mémorisation du terminal (1) serveur peut, dans un mode de réalisation de l'invention, consister en une étape d'enregistrement du message (M), mis en forme d'après les tags (T) qu'il contient, dans un fichier (G) contenant l'ensemble des messages (M) échangés dans le groupe d'échange identifié suite à l'étape d'identification (92). Dans une variante de réalisation, l'étape d'enregistrement (94) du message (M) dans le fichier (G) est suivie d'une étape de conversion (96) du fichier (G) sous la forme d'une page Internet, puis de publication (97) de cette page Internet pour une consultation éventuelle par les utilisateurs participant au groupe d'échange correspondant.

Lorsque l'étape d'envoi (80) d'au moins un message (M) est mise en oeuvre par le terminal (1) serveur pour envoyer le message (M) vers au moins un terminal (2) mobile communicant, l'étape de réception (90) de chacun des messages (M) par des moyens (24) de communication de chacun des terminaux (2) mobiles communicants est suivie d'une étape de lecture de chacun des messages (M) par les moyens (22) de traitement de chacun des terminaux (2) mobiles communicants et interprétation (91) des tags (T) contenus dans ces messages (M). L'identification (92) du groupe d'échange auquel chacun des messages (M) est associé permet, lorsque le groupe d'échange identifié correspond à un groupe d'échange auquel le terminal (2) mobile communicant destinataire participe, une étape de mise en forme (93) du message (M) d'après les tags qu'il contient. Cette mise en forme (93) du message (M) est suivie d'une étape d'affichage (95), sur des moyens (21) d'affichage du terminal (2) mobile communicant, du message (M) avec sa mise en forme définie par les tags (T), puis d'une éventuelle étape d'enregistrement (94) du contenu du message (M) dans les moyens (23) de mémorisation du terminal (2) mobile communicant lorsque son utilisateur le souhaite. Dans une variante de réalisation, l'étape d'enregistrement (94) du contenu du message (M) dans les moyens (23) de mémorisation du terminal (2) mobile communicant pourra être suivie d'une étape d'élaboration (50) d'un message (M), mise en oeuvre grâce à l'interprétation (91) des tags (T) contenus dans chacun des messages (M) correspondant à un groupe d'échange auquel participe le terminal (2) mobile communicant. Cette étape d'élaboration (50) d'un message (M) est alors mise en oeuvre soit par saisie (51) du texte du message par un utilisateur grâce aux moyens (20) de saisie et aux moyens (21) d'affichage du terminal (2) mobile communicant, soit de façon automatique (52) par les moyens (22) de traitement du terminal (2) mobile communicant, grâce aux informations fournies par les tags (T) contenus dans le message reçu. Cette étape d'élaboration (50) du message (M) est suivie d'une étape d'incorporation (60) d'au moins un tag (T) dans ce message, mise en oeuvre soit de façon automatique (63) par les moyens (22) de traitement du terminal (2) mobile communicant, soit par un utilisateur effectuant une sélection (62), grâce aux moyens (20) de saisie du terminal (2) mobile communicant, d'au moins un tag (T) parmi une pluralité de tags stockés dans les moyens de mémorisation du terminal (2) mobile communicant et affichés (61) grâce aux moyens (21) d'affichage du terminal (2) mobile communicant.

On comprend donc que l'invention atteint les buts qu'elle s'était fixés et fourni les moyens nécessaires à l'échange de messages entre des terminaux communicants, en facilitant ces échanges grâce à l'interprétation de tags (T) incorporés dans les messages correspondant à des groupes d'échanges gérés par un serveur. L'exécution par les terminaux de tâches définies au préalable facilitant les communications et limitant le coût généré par la participation des utilisateurs de ces terminaux à des groupes d'échange.

## Revendications

1. Procédé d'échange de messages (M), via au moins un canal de transmission d'au moins un réseau (RT) de communication mobile, entre au moins un terminal (1) serveur et au moins un terminal (2) mobile communicant d'un utilisateur participant à un groupe d'échange géré par le serveur (1), les messages (M) contenant au moins une étiquette (T), dite tag, consistant en des données permettant au moins une mise en forme du message (M) lors de l'interprétation du tag (T) par des moyens (12, 22) de traitement de données des terminaux (1, 2) recevant les messages (M), **caractérisé en ce qu'**il comporte les étapes suivantes :
- élaboration (50) d'au moins un message (M) associé à des données représentatives de coordonnées d'appel d'au moins un terminal (1, 2) destinataire du réseau (RT) de communication mobile,
- incorporation (60) d'au moins un tag (T) dans le message (M), à partir d'une pluralité de tags prédéterminés, stockés dans des moyens (13, 23) de mémorisation du terminal (2, 1) émetteur, au moins un tag (T) ainsi incorporé permettant d'identifier le groupe d'échange auquel le message (M) est associé,
- choix (70), par le terminal (2, 1) émetteur, d'au moins un canal à utiliser pour la transmission du message (M), parmi une pluralité de canaux de transmission disponibles au sein du réseau (RT) de communication mobile, en fonction du nombre de destinataires et de paramètres relatifs aux terminaux (1, 2) destinataires,
- envoi (80) du message (M) via au moins un canal de transmission d'au moins un réseau (RT) de communication mobile.

2. Procédé selon la revendication 1, **caractérisé en ce qu'**il comporte une étape préalable de définition d'une pluralité de tags (T) et d'enregistrement, dans les moyens (13, 23) de mémorisation des différents terminaux (1, 2), de ces tags (T) consistant en des mots clés associés, au moins au sein des messages (M), à au moins un caractère ou symbole permettant l'identification de ces mots clés en tant que tags (T) interprétables par les moyens (12, 22) de traitement de données des terminaux (1, 2) échangeant des messages (M) au sein desquels les tags (T) sont destinés à être incorporés.

3. Procédé selon la revendication 2, **caractérisé en ce que** l'étape de définition des tags (T) est associée à une étape d'attribution d'au moins une fonction à chacun des tags (T), l'interprétation d'un tag (T) résultant en l'exécution d'au moins une tâche correspondant à la fonction qui lui est attribuée parmi au moins les fonctions suivantes :
- définition de groupes d'échange consistant en des services tels que des jeux, des forums ou des loteries, auxquels des utilisateurs de terminaux (2) mobiles communicants peuvent participer en se joignant à ce groupe d'échange,
- définition de formats de mise en forme des messages (M) pour la présentation de leur contenu aux utilisateurs de terminaux (2) mobiles communicants qui participent à un groupe d'échange,
- définition de méthodes de réponse aux messages (M) reçus par les utilisateurs de terminaux (2) mobiles communicants qui participent à un groupe d'échange,
- définition de choix associés à au moins une fonction d'au moins un autre tag (T), afin de proposer des actions à effectuer aux utilisateurs de terminaux (2) mobiles communicants participant à un groupe d'échange.

4. Procédé selon une des revendications 1 à 3, **caractérisé en ce que** l'étape d'incorporation (60) d'au moins un tag (T) dans le message (M) comporte une étape d'incorporation d'au moins un tag (T) correspondant à des coordonnées d'appel du terminal (1, 2) émetteur pour permettre une réponse du destinataire.

5. Procédé selon une des revendications 1 à 4, **caractérisé en ce que** les étapes d'élaboration (50) d'au moins un message (M) et d'incorporation (60) d'au moins un tag (T) dans ce message (M) sont mises en oeuvre par un utilisateur d'un terminal (2) mobile communicant, grâce à des moyens (20) de saisie et des moyens (21) d'affichage du terminal (2) mobile communicant et consistent, respectivement, en une étape de saisie (51) du texte du message (M) à envoyer et en une étape d'affichage (61) d'une pluralité de tags (T) stockés dans des moyens (23) de mémorisation du terminal (2) mobile communicant émetteur, suivie d'une sélection (62) d'au moins un tag (T) à incorporer dans le message.

6. Procédé selon la revendication 5, **caractérisé**, d'une part, en ce que les paramètres relatifs aux terminaux destinataires correspondent au moins aux coordonnées d'appel du terminal (1) serveur et, d'autre part, en ce que l'étape de choix (70) du canal à utiliser pour la transmission du message (M) via le réseau (RT) de communication mobile consiste en une sélection automatique (71) d'un canal GSM par les moyens (22) de traitement et des moyens (24) de communication du terminal (2) mobile communicant émetteur, pour l'envoi (81) par GSM du message (M) vers le terminal (1) serveur.

7. Procédé selon la revendication 6, **caractérisé en ce que** l'étape d'envoi (80) du message (M) vers le terminal (1) serveur destinataire via un canal GSM du réseau (RT) de communication mobile est suivie des étapes suivantes, mises en oeuvre par le terminal (1) serveur :
- réception (90) du message (M) par des moyens (14) de communication du terminal (1) serveur destinataire,
- lecture du message (M) par les moyens (12) de traitement du terminal (1) serveur et interprétation (91) des tags (T) contenus dans le message (M),
- identification (92) du groupe d'échange auquel le message (M) est associé et mise en forme (93) du message (M) d'après les tags qu'il contient, puis enregistrement (94) du contenu du message (M) dans les moyens (13) de mémorisation du terminal (1) serveur.

8. Procédé selon la revendication 7, **caractérisé en ce que** l'étape d'enregistrement (94) du contenu du message (M) dans les moyens (13) de mémorisation du terminal (1) serveur consiste en une étape d'enregistrement du message (M), mis en forme d'après les tags (T) qu'il contient, dans un fichier (G) contenant l'ensemble des messages (M) échangés dans le groupe d'échange identifié suite à l'étape d'identification (92).

9. Procédé selon la revendication 8, **caractérisé en ce que** l'étape d'enregistrement (94) du message (M) dans le fichier (G) est suivie d'une étape de conversion (96) du fichier (G) sous la forme d'une page Internet, puis de publication (97) de cette page Internet pour une consultation éventuelle par les utilisateurs participant au groupe d'échange correspondant.

10. Procédé selon la revendication 7, **caractérisé en ce que** les étapes d'élaboration (50) du message (M) et d'incorporation (60) d'au moins un tag (T) dans ce message (M) sont mises en oeuvre, de façon automatique (52, 63), par les moyens (12) de traitement du terminal (1) serveur, en réponse à un message (M) envoyé par un terminal (2) mobile communicant, grâce au moins à l'étape d'interprétation (91) des tags (T) contenus dans ce message et à l'étape d'identification (92) du groupe d'échange auquel ce message (M) envoyé par le terminal (2) mobile communicant était associé.

11. Procédé selon une des revendications 1 à 9, **caractérisé en ce que** les étapes d'élaboration (50) du message (M) et d'incorporation (60) d'au moins un tag (T) dans ce message (M) sont mises en oeuvre par un utilisateur du terminal (1) serveur, grâce à des moyens (10) de saisie et des moyens (11) d'affichage du terminal (1) serveur et consistent, respectivement, en une étape de saisie (51) du texte du message (M) à envoyer et en une étape d'affichage (61) d'une pluralité de tags (T) stockés dans des moyens (13) de mémorisation du terminal (1) serveur, suivie d'une sélection (62) d'au moins un tag (T) à incorporer dans le message.

12. Procédé selon une des revendications 1 à 9, **caractérisé en ce que** l'étape d'élaboration (50) du message (M) est mise en oeuvre par un utilisateur d'un terminal (3) d'un fournisseur de contenu, grâce à des moyens (30) de saisie et des moyens (31) d'affichage du terminal (3) du fournisseur de contenu et consiste en une saisie (51) du texte du message (M) à envoyer.

13. Procédé selon la revendication 12, **caractérisé en ce que** l'étape d'incorporation (60) d'au moins un tag (T) dans le message (M) à envoyer aux destinataires est également mise en oeuvre par un utilisateur du terminal (3) du fournisseur de contenu, grâce à des moyens (30) de saisie et des moyens (31) d'affichage du terminal (3) du fournisseur de contenu et consiste en une étape d'affichage (61) d'une pluralité de tags (T) stockés dans des moyens (33) de mémorisation du terminal (3) du fournisseur de contenu, suivie d'une étape de sélection (62) d'au moins un tag (T) à incorporer dans le message (M), cette dernière étant suivie d'une étape d'envoi (55) du message (M) au terminal (1) serveur, via au moins un réseau (RI) de communication, grâce à des moyens (34) de communication du terminal (3) du fournisseur de contenu.

14. Procédé selon la revendication 12, **caractérisé en ce que** l'étape d'élaboration (50) du message (M), mise en oeuvre par un utilisateur d'un terminal (3) du fournisseur de contenu, est suivie d'une étape d'envoi (55) du message (M) au terminal (1) serveur, via au moins un réseau (RI) de communication, grâce à des moyens (34) de communication du terminal (3) du fournisseur de contenu, les moyens (12) de traitement du terminal (1) serveur mettant alors en oeuvre, de façon automatique (63), l'étape d'incorporation (60) d'au moins un tag (T) dans le message (M) à envoyer aux destinataires.

15. Procédé selon une des revendications 1 à 14, **caractérisé**, d'une part, en ce que les paramètres relatifs aux destinataires correspondent au moins aux coordonnées d'appel d'au moins un terminal (2) mobile communicant et, d'autre part, en ce que l'étape de choix (70) du canal à utiliser pour l'envoi (80) du message (M) vers le terminal (2) mobile communicant, via le réseau (RT) de communication mobile, est effectuée de façon automatique par les moyens (12) de traitement du terminal (1) serveur implémentant une méthode de sélection prédéterminée et consiste soit en une sélection (72) d'un canal DVB-H, pour une diffusion (82) du message par DVB-H, lorsque le nombre de destinataires est supérieur à un nombre prédéfini dans la méthode de sélection, soit en une sélection (73) d'un canal GSM, pour un envoi (81) du message par GSM, lorsque le nombre de destinataires est égal à ce nombre prédéfini, soit en une sélection (74) d'un canal DVB-H et d'au moins un canal GSM, pour une double diffusion (81, 82) du message (M) par DVB-H et GSM, lorsque le nombre de destinataires est supérieur à ce nombre prédéfini mais qu'au moins un terminal (2) mobile communicant destinataire participant au groupe d'échange se trouve dans l'impossibilité de recevoir les signaux DVB-H diffusés dans les zones d'influence (DVB₁) des antennes (16) DVB-H.

16. Procédé selon la revendication 15, **caractérisé en ce que** l'étape d'envoi (80) d'au moins un message (M), via un canal DVB-H, par le terminal (1) serveur vers au moins un terminal (2) mobile communicant est précédée d'une étape de création (79) d'un fichier (F) contenant l'ensemble des messages (M) à diffuser vers les destinataires de l'ensemble des groupes d'échanges gérés par le terminal (1) serveur, l'étape d'envoi (80) d'au moins un message (M) consistant alors en une diffusion (83) de ce fichier (F) sur un canal DVB-H permettant la diffusion de l'ensemble de ces messages (M) vers les destinataires de l'ensemble des groupes d'échange gérés par le terminal (1) serveur, les tags (T) incorporés dans chacun des messages (M) du fichier (F) permettant aux moyens (22) de traitement des terminaux (2) mobiles communicants d'effectuer une étape de filtrage des messages (M) pour ne présenter aux utilisateurs que le(s) message(s) (M) correspondant au(x) groupe(s) d'échange auquel (auxquels) ils participent.

17. Procédé selon une des revendications 15 et 16, **caractérisé en ce que** l'étape d'envoi (80) d'au moins un message (M) par le terminal (1) serveur, vers au moins un terminal (2) mobile communicant, via au moins un canal du réseau (RT) de communication mobile, est suivie des étapes suivantes, mises en oeuvre par chacun des terminaux (2) mobiles communicants :
- réception (90) de chacun des messages (M) par des moyens (24) de communication de chacun des terminaux (2) mobiles communicants,
- lecture de chacun des messages (M) par les moyens (22) de traitement de chacun des terminaux (2) mobiles communicants et interprétation (91) des tags (T) contenus dans ces messages (M),
- filtrage des messages (M) par identification (92) du groupe d'échange auquel chacun des messages (M) est associé puis, lorsque le groupe d'échange identifié correspond à un groupe d'échange auquel le terminal (2) mobile communicant destinataire participe, mise en forme (93) du message (M) d'après les tags qu'il contient.

18. Procédé selon la revendication 17, **caractérisé en ce que** l'étape de mise en forme (93) du message (M) d'après les tags (T) qu'il contient est suivie d'une étape d'affichage (95), sur des moyens (21) d'affichage du terminal (2) mobile communicant, du message (M) avec sa mise en forme définie par les tags (T), puis d'une éventuelle étape d'enregistrement (94) du contenu du message (M) dans les moyens (23) de mémorisation du terminal (2) mobile communicant lorsque son utilisateur le souhaite.

19. Procédé selon une des revendications 17 et 18, **caractérisé en ce que** l'étape d'enregistrement (94) du contenu du message (M) dans les moyens (23) de mémorisation du terminal (2) mobile communicant est suivie d'une étape d'élaboration (50) d'un message (M), mise en oeuvre grâce à l'interprétation (91) des tags (T) contenus dans chacun des messages (M) correspondant à un groupe d'échange auquel participe le terminal (2) mobile communicant, soit par saisie (51) du texte du message par un utilisateur grâce aux moyens (20) de saisie et aux moyens (21) d'affichage du terminal (2) mobile communicant, soit de façon automatique (52) par les moyens (22) de traitement du terminal (2) mobile communicant, grâce aux informations fournies par les tags (T) contenus dans le message reçu.

20. Procédé selon la revendication 19, **caractérisé en ce que** l'étape d'élaboration (50) d'un message (M) est suivie d'une étape d'incorporation (60) d'au moins un tag (T) dans ce message, mise en oeuvre soit de façon automatique (63) par les moyens (22) de traitement du terminal (2) mobile communicant, soit par un utilisateur effectuant une sélection (62), grâce aux moyens (20) de saisie du terminal (2) mobile communicant, d'au moins un tag (T) parmi une pluralité de tags stockés dans les moyens de mémorisation du terminal (2) mobile communicant et affichés (61) grâce aux moyens (21) d'affichage du terminal (2) mobile communicant.

21. Procédé selon une des revendications 15 à 20, **caractérisé en ce que** les étapes d'envoi (80), via un canal DVB-H, d'au moins un message (M) ou du fichier (F) sont accompagnées d'une diffusion (84), via le canal DVB-H, d'une nouvelle liste de tags disponibles permettant aux terminaux (2) mobiles communicants de mettre en oeuvre une étape de mise à jour (98) de la pluralité de tags stockés dans leurs moyens (23) de mémorisation.

22. Procédé selon une des revendications 1 à 21, **caractérisée en ce qu'**il comporte une étape préalable d'implantation d'un applicatif exécutable sur les moyens (12, 22) de traitement des terminaux (1, 2), permettant la mise en oeuvre des différentes étapes du procédé et, en particulier, l'identification des tags (T) au sein des messages (M) échangés dans les groupes d'échange et l'interprétation de ces tags (T) grâce à la consultation des moyens (13, 23) de mémorisation des différents terminaux (1, 2) stockant les différents tags (T) associés à des fonctions définissant des tâches à exécuter par les moyens (12, 22) de traitement des terminaux (1, 2).

23. Système d'échange de messages (M), via au moins un canal de transmission d'au moins un réseau (RT) de communication mobile, entre au moins un terminal (1) serveur et au moins un terminal (2) mobile communicant d'un destinataire participant à un groupe d'échange géré par le serveur (1), les messages (M) contenant au moins une étiquette (T), dite tag, consistant en des données permettant au moins une mise en forme du message (M), le système étant **caractérisé en ce qu'**il comporte au moins un terminal (1) serveur et au moins un terminal (2) mobile communicant comportant chacun:
• des moyens (12, 22) de traitement comportant :
- des moyens d'interprétation des tags (T) contenus dans les messages (M) échangés par les terminaux (1, 2) participant aux différents groupes d'échange gérés par le serveur (1),
- des moyens d'élaboration de messages (M),
- des moyens d'incorporation de tags (T) dans les messages (M) élaborés,
- des moyens de sélection d'au moins un canal à utiliser pour la transmission des messages (M) vers les terminaux (1, 2) destinataires, en fonction du nombre de destinataires du message (M) et de paramètres relatifs à ces terminaux,
• des moyens (13, 23) de mémorisation stockant une pluralité de tags (T) interprétables par les terminaux participant aux différents groupes d'échange,
• des moyens (14, 24) de communication agencés pour établir des communications avec d'autres terminaux (1, 2, 3) via au moins un canal (GSM1, GSM2, DVB1) d'au moins un réseau (RT, RI) de communication et échanger des messages (M) avec ces terminaux (1, 2, 3),

24. Système selon la revendication 23, **caractérisé en ce qu'**au moins le terminal (1) serveur comporte des moyens de définition de tags permettant, d'une part, d'associer des mots clés avec au moins un caractère ou symbole, de façon à définir des tags (T) interprétables par les moyens (12, 22) de traitement de données des terminaux (1, 2) et, d'autre part, d'attribuer à ces tags (T) des fonctions définissant des tâches à exécuter par les moyens (12, 22) de traitement des terminaux (1, 2) lors de l'interprétation des tags (T), des moyens d'enregistrement du terminal (1) serveur permettant le stockage de ces tags (T) dans les moyens de mémorisation du terminal (1) serveur, une tâche à exécuter étant définie par au moins une fonction parmi au moins les fonctions suivantes :
- définition de groupes d'échange consistant en des services tels que des jeux, des forums ou des loteries, auxquels des utilisateurs de terminaux (2) mobiles communicants peuvent participer en se joignant à ce groupe d'échange,
- définition de formats de mise en forme des messages (M) pour la présentation de leur contenu aux utilisateurs de terminaux (2) mobiles communicants qui participent à un groupe d'échange,
- définition de méthodes de réponse aux messages (M) reçus par les utilisateurs de terminaux (2) mobiles communicants qui participent à un groupe d'échange,
- définition de choix associés à au moins une fonction d'au moins un autre tag (T), afin de proposer des actions à effectuer aux utilisateurs de terminaux (2) mobiles communicants participant à un groupe d'échange.

25. Système selon une des revendications 23 et 24, **caractérisé en ce que** les moyens d'interprétation des tags (T) comportent des moyens de lecture des données constitutives des messages (M) et des moyens d'identification des tags (T) détectant, au sein de ces messages, les données représentatives du caractère ou symbole auquel les tags sont associés, de façon à identifier les tags (T) au sein des messages (M) échangés dans les groupes d'échange, des moyens de consultation des moyens (13, 23) de mémorisation des différents terminaux (1, 2) permettant aux moyens (12, 22) de traitement de ces terminaux (1, 2) d'exécuter les tâches définies par les fonctions attribuées aux différents tags (T).

26. Système selon une des revendications 23 à 25, **caractérisé en ce que** les moyens d'incorporation de tags (T) dans les messages (M) élaborés comportent des moyens de conversion de coordonnées d'appel du terminal (1, 2) émetteur en au moins un tag permettant une réponse du destinataire.

27. Système selon une des revendications 23 à 26, **caractérisé en ce que** les moyens d'élaboration de messages (M) et les moyens d'incorporation de tags (T) dans les messages (M) consistent, dans le terminal (2) mobile communicant, en des moyens (20) de saisie et des moyens (21) d'affichage permettant à un utilisateur, émetteur du message (M), de contrôler les moyens (12) de traitement du terminal (2) mobile communicant pour élaborer au moins un message (M) à envoyer.

28. Système selon une des revendications 23 à 27, **caractérisé en ce que** les moyens de sélection du canal à utiliser pour la transmission du message (M) via le réseau (RT) de communication mobile comportent, dans le terminal (2) mobile communicant, des moyens de sélection automatique d'un canal GSM contrôlant les moyens (22) de traitement et les moyens (24) de communication du terminal (2) mobile communicant pour envoyer le message (M) vers le terminal (1) serveur.

29. Système selon une des revendications 23 à 28, **caractérisé en ce que** les moyens (12) de traitement du terminal (1) serveur comportent, d'une part, des moyens de création, dans les moyens (13) de mémorisation du terminal (1) serveur, d'au moins un fichier (G) correspondant à au moins un groupe d'échange défini par au moins un tag (T) et des moyens d'enregistrer, dans ce fichier (G), l'ensemble des messages (M) contenant ce tag (T) et correspondant à ce groupe d'échange.

30. Système selon la revendication 29, **caractérisé en ce que** les moyens (12) de traitement du terminal (1) serveur comportent des moyens de conversion du fichier (G) en une page Internet et des moyens de publication de cette page Internet pour une consultation éventuelle par les utilisateurs participant au groupe d'échange correspondant.

31. Système selon une des revendications 23 à 30, **caractérisé en ce que** les moyens d'interprétation implantés dans le terminal (1) serveur contrôlent, de façon automatique, les moyens d'élaboration de messages (M) et les moyens d'incorporation de tags (T) du terminal (1) serveur, pour élaborer une réponse automatique définie au moins par une fonction attribuée à au moins un tag (T) incorporé dans un message (M) envoyé par un terminal (2) mobile communicant, l'exécution d'au moins une tâche définie par cette fonction résultant en une création automatique d'un message prédéfini associé au groupe d'échange auquel le message (M) envoyé par le terminal (2) mobile communicant était associé.

32. Système selon une des revendications 23 à 31, **caractérisé en ce que** les moyens d'élaboration de messages (M) et les moyens d'incorporation de tags (T) du terminal (1) serveur comportent des moyens (10) de saisie et des moyens (11) d'affichage contrôlés par un utilisateur effectuant une saisie du texte du message (M) à envoyer et une sélection, parmi la pluralité de tags (T) stockés dans des moyens (13) de mémorisation du terminal (1) serveur, d'au moins un tag (T) à incorporer dans le message.

33. Système selon une des revendications 23 à 32, **caractérisé en ce qu'**il comporte un terminal (3) d'un fournisseur de contenu comportant des moyens (30) de saisie et des moyens (31) d'affichage permettant à un utilisateur de ce terminal (3) du fournisseur de contenu de saisir le texte du message (M) à envoyer.

34. Système selon la revendication 33, **caractérisé en ce que** le terminal (3) du fournisseur de contenu comporte des moyens (34) de communication permettant l'envoi du message (M) élaboré au terminal (1) serveur, via au moins un réseau (RI) de communication, les moyens (12) de traitement du terminal (1) serveur permettant l'incorporation d'au moins un tag (T) dans le message (M) à envoyer aux destinataires.

35. Système selon la revendication 33, **caractérisé en ce que** le terminal (3) du fournisseur de contenu comporte également des moyens d'incorporation de tags (T) dans les messages (M), les moyens (30) de saisie et les moyens (31) d'affichage du terminal (3) du fournisseur de contenu permettant à l'utilisateur du terminal (3) du fournisseur de contenu de sélectionner au moins un tag (T) à incorporer dans le message (M), parmi une pluralité de tags (T) stockés dans des moyens (33) de mémorisation du terminal du fournisseur de contenu et affichés sur ses moyens (31) d'affichage, des moyens (34) de communication du terminal (3) du fournisseur de contenu permettant l'envoi du message (M) au terminal (1) serveur, via au moins un réseau (RI) de communication.

36. Système selon une des revendications 23 à 35, **caractérisé en ce que** les moyens de sélection, par le terminal (1) serveur, du canal à utiliser pour l'envoi d'au moins un message (M) vers au moins un terminal (2) mobile communicant comportent des moyens d'évaluation des paramètres relatifs aux destinataires, de détermination du nombre de terminaux destinataires, de leurs coordonnées d'appel et leur accessibilité au sein du réseau (RT) de communication mobile et comportent des moyens de sélection automatique implémentant une méthode de sélection prédéterminée et permettant, en fonction du résultat obtenu par ces moyens d'évaluation, une sélection d'au moins un canal parmi soit un canal DVB-H, sélectionné lorsque le nombre de destinataires est supérieur à un nombre prédéfini dans la méthode de sélection, soit un canal GSM, sélectionné lorsque le nombre de destinataires est égal à ce nombre prédéfini, soit à la fois un canal DVB-H et au moins un canal GSM, lorsque le nombre de destinataires est supérieur à ce nombre prédéfini mais qu'au moins un terminal (2) mobile communicant destinataire participant au groupe d'échange se trouve dans l'impossibilité de recevoir les signaux DVB-H diffusés dans les zones d'influence (DVB₁) d'antennes (16) DVB-H du réseau (RT) de communication mobile.

37. Système selon la revendication 36, **caractérisé en ce que** le terminal (1) serveur comporte des moyens de création d'un fichier (F) contenant l'ensemble des messages (M) à diffuser vers les destinataires de l'ensemble des groupes d'échanges gérés par le terminal (1) serveur et **en ce que** les moyens (14) de communication de ce terminal (21) serveur comportent des moyens de diffusion de ce fichier (F) sur un canal DVB-H, permettant la diffusion de l'ensemble des messages (M) du fichier vers l'ensemble des terminaux (2) mobiles communicants participant aux différents groupes d'échanges gérés par le terminal (1) serveur, les moyens d'interprétation de chacun de ces terminaux (2) mobiles communicants filtrant les différents messages (M) du fichier (F) de façon à ne présenter à leur utilisateur que les messages (M) correspondant au groupe d'échange auquel il participe.

38. Système selon une des revendications 23 à 37, **caractérisé en ce que** les moyens d'interprétation du terminal (2) mobile communicant identifient le groupe d'échange auquel correspond chacun des messages (M) reçus et mettent en forme les messages (M) correspondant à au moins un groupe d'échange auquel le terminal (2) mobile communicant participe, d'après les tags contenus dans ces messages, des moyens (21) d'affichage du terminal (2) mobile communicant permettant un affichage du message (M) avec sa mise en forme définie par les tags (T) qu'il contient et un éventuel enregistrement du message (M) dans les moyens (23) de mémorisation du terminal (2) mobile communicant lorsque son utilisateur le commande grâce aux moyens (20) de saisie.

39. Système selon une des revendications 23 à 38, **caractérisé en ce que** les moyens d'interprétation du terminal (2) mobile communicant contrôlent, de façon automatique, les moyens d'élaboration de messages (M) et les moyens d'incorporation de tags (T) du terminal (2) mobile communicant, pour élaborer une réponse automatique définie par une fonction attribuée à au moins tag (T) incorporé dans un message (M) envoyé par un terminal (1) serveur, l'exécution d'au moins une tâche définie par cette fonction résultant en une création automatique d'un message prédéfini associé au groupe d'échange auquel le message (M) envoyé par le terminal (1) serveur était associé.

40. Système selon une des revendications 23 à 39, **caractérisé en ce que** les moyens d'élaboration de messages (M) et les moyens d'incorporation de tags (T) du terminal (2) mobile communicant comportent des moyens (20) de saisie et des moyens (21) d'affichage contrôlés par un utilisateur effectuant une saisie du texte du message (M) à envoyer et une sélection, parmi la pluralité de tags (T) stockés dans des moyens (23) de mémorisation du terminal (2) mobile communicant, d'au moins un tag (T) à incorporer dans le message.

41. Système selon une des revendications 23 et 40, **caractérisé en ce que** les moyens de diffusion par DVB-H du terminal (1) serveur comportent des moyens de diffusion de la pluralité de tags stockés dans ses moyens (23) de mémorisation permettant aux moyens (22) de traitement des terminaux (2) mobiles communicants de mettre à jour la pluralité de tags stockés dans leurs moyens (23) de mémorisation.

42. Système selon une des revendications 23 à 41, **caractérisée en ce que** les différents moyens des terminaux (1, 2, 3) sont mis en oeuvre par au moins un applicatif exécuté sur leurs moyens (12, 22, 32) de traitement grâce à l'enregistrement, dans leurs moyens (13, 23, 33) de mémorisation, de données dont au moins une partie est commune aux différents types de terminaux, de façon à assurer leur compatibilité et/ou leur complémentarité.

## Claims

1. Method of exchanging messages (M) via at least one transmission channel of at least one mobile communication network (RT) between at least one server terminal (1) and at least one communicating mobile terminal (2) of a user participating in an exchange group managed by the server (1), the messages (M) containing at least one tag (T) comprising data enabling at least formatting of the message (M) during the interpretation of the tag (T) by data processing means (12, 22) of the terminals (1, 2) receiving the messages (M), **characterised in that** it includes the following steps:
- creation (50) of at least one message (M) associated with data representing call co-ordinates of at least one destination terminal (1, 2) of the mobile communication network (RT),
- incorporation (60) of at least one tag (T) into the message (M), starting from a plurality of predetermined tags stored in memory means (13, 23) of the transmitting terminals (2, 1), at least one tag thus incorporated enabling identification of the exchange group with which the message (M) is associated,
- choice (70) by the transmitting terminal (2, 1) of at least one channel to be used for the transmission of the message (M) from amongst a plurality of transmission channels available within the mobile communication network (RT) as a function of the number of recipients and parameters relating to the destination terminals (1, 2),
- transmission (80) of the message (M) via at least one transmission channel of at least one mobile communication network (RT).

2. Method as claimed in Claim 1, **characterised in that** it includes a prior step of definition of a plurality of tags (T) and recording, in the memory means (13, 23) of the different terminals (1, 2), these tags (T) which comprise keywords associated at least within the messages (M) with at least one character or symbol enabling the identification of these keywords as tags (T) which can be interpreted by the data processing means (12, 22) of the terminals (1, 2) exchanging messages (M) into which the tags (T) are intended to be incorporated.

3. Method as claimed in Claim 2, **characterised in that** the step of definition of the tags (T) is associated with a step of assignment of at least one function to each of the tags (T), the interpretation of a tag (T) resulting in the execution of at least one task corresponding to the function assigned to it from amongst at least the following functions:
- definition of exchange groups comprising services such as games, forums or lotteries in which users of communicating mobile terminals (2) can participate by joining this exchange group,
- definition of formats for formatting messages (M) for the presentation of the contents thereof to the users of communicating mobile terminals (2) participating in an exchange group,
- definition of methods of response to the messages (M) received by the users of communicating mobile terminals (2) participating in an exchange group,
- definition of choices associated with at least one function of at least one other tag (T) in order to propose actions to be carried out to the users of communicating mobile terminals (2) participating in an exchange group.

4. Method as claimed in any one of Claims 1 to 3, **characterised in that** the step of incorporation (60) of at least one tag (T) into the message (M) includes a step of incorporation of at least one tag (T) corresponding to call co-ordinates of the transmitting terminal (1, 2) in order to enable a response by the recipient.

5. Method as claimed in any one of Claims 1 to 4, **characterised in that** the steps of creation (50) of at least one message (M) and incorporation (60) of at least one tag (T) into this message (M) are carried out by a user of a communicating mobile terminal (2) by way of input means (20) and display means (21) of the communicating mobile terminal (2) and comprise respectively a step of input (51) of the text of the message (M) to be sent and a step of display (61) of a plurality of tags (T) stored in memory means (23) of the transmitting communicating mobile terminal (2), followed by a selection (62) of at least one tag (T) to be incorporated into the message.

6. Method as claimed in Claim 5, **characterised**, on the one hand, in that the parameters relating to the destination terminals correspond at least to the call co-ordinates of the server terminal (1) and, on the other hand, in that the step of choice (70) of the channel to be used for the transmission of the message (M) via the mobile communication network (RT) comprises an automatic selection (71) of a GSM channel by the processing means (22) and the communication means (24) of the transmitting communicating mobile terminal (2), for the transmission (81) of the message (M) to the server terminal (1) by GSM.

7. Method as claimed in Claim 6, **characterised in that** the step of transmission (80) of the message (M) to the destination server terminal (1) via a GSM channel of the mobile communication network (RT) is followed by the following steps carried out by the server terminal (I):
- reception (90) of the message (M) by communication means (14) of the destination server terminal (1),
- reading of the message (M) by the processing means (12) of the server terminal (19) and interpretation (91) of the tags (T) contained in the message (M),
- identification (92) of the exchange group with which the message (M) is associated and formatting (93) of the message (M) according to the tags which it contains, then recording (94) of the contents of the message (M) in the memory means (13) of the server terminal (1).

8. Method as claimed in Claim 7, **characterised in that** the step of recording (94) of the message (M) in the memory means (13) of the server terminal (1) comprises a step of recording of the message (M), formatting according to the tags (T) which it contains, in a file (G) containing all of the messages (M) exchanged in the exchange group identified following the identification step (92).

9. Method as claimed in Claim 8, **characterised in that** the step of recording (94) of the message (M) in the file (G) is followed by a step of conversion (96) of the file (G) into the form of a web page, then publication (97) of this web page for possible consultation by the users participating in the corresponding exchange group.

10. Method as claimed in Claim 7, **characterised in that** the steps of creation (50) of the message (M) and incorporation (60) of at least one tag (T) into this message (M) are carried out automatically (52, 63) by the processing means (12) of the server terminal (1) in response to a message (M) sent by a communicating mobile terminal (2) by means of at least the step of interpretation (91) of the tags (T) contained in this message and the step of identification (92) of the exchange group with which this message (M) sent by the communicating mobile terminal (2) was associated.

11. Method as claimed in any one of Claims 1 to 9, **characterised in that** the steps of creation (50) of the message (M) and incorporation (60) of at least one tag (T) into this message (M) are carried out by a user of the server terminal (1) by way of input means (10) and display means (11) of the server terminal and comprise respectively a step of input (51) of the text of the message (M) to be sent and a step of display (61) of a plurality of tags (T) stored in memory means (13) of the server terminal (1), followed by a selection (62) of at least one tag (T) to be incorporated into the message.

12. Method as claimed in any one of Claims 1 to 9, **characterised in that** the step of creation (50) of the message (M) is carried out by a user of a content provider terminal (3) by way of input means (30) and display means (31) of the content provider terminal (3) and comprises input (51) of the text of the message (M) to be sent.

13. Method as claimed in Claim 12, **characterised in that** the step of incorporation (60) of at least one tag (T) into the message (M) to be sent to recipients is likewise carried out by a user of the content provider terminal (3) by way of input means and display means (31) of the content provider terminal (3) and comprises a step of display (61) of a plurality of tags (T) stored in memory means (33) of the content provider terminal (3), followed by a step of selection (62) of at least one tag (T) to be incorporated into the message (M), this latter being following by a step of transmission (55) of the message (M) to the server terminal (1) via at least one communication network (RI) by way of communication means (34) of the content provider terminal (3).

14. Method as claimed in Claim 12, **characterised in that** the step of creation (50) of the message (M) carried out by a user of a content provider terminal (3) is followed by a step of transmission (55) of the message (M) to the server terminal (I) via at least one communication network (RI) by way of communication means (34) of the content provider terminal (3), the processing means (12) of the server terminal (1) then implementing automatically (63) the step of incorporation (60) of at least one tag (T) into the message (M) to be sent to the recipients.

15. Method as claimed in any one of Claims 1 to 14, **characterised**, on the one hand, in that the parameters relating to the recipients correspond at least to the call co-ordinates of at least one communicating mobile terminal (2) and, on the other hand, in that the step of choice (70) of the channel to be used for the transmission (80) of the message (M) to the communicating mobile terminal (2) via the mobile communication network (RT) is effected automatically by the processing means (12) of the server terminal (1) implementing a predetermined method of selection and comprises either a selection (72) of a DVB-H channel for broadcasting (82) of the message by DVB-H when the number of recipients is greater than a number predefined in the method of selection, or a selection (73) of a GSM channel for transmission (81) of the message by GSM when the number of recipients is equal to this predefined number, or a selection (74) of a DVB-H channel and at least one GSM channel for double broadcasting (81, 82) of the message (M) by DVB-H and GSM when the number of recipients is greater than this predefined number but at least one communicating mobile terminal (2) participating in the exchange group is incapable of receiving the DVB-H signals broadcast in the zone of influence (DVB₁) of the DVB-H antennas (16).

16. Method as claimed in Claim 15, **characterised in that** the step of transmission (80) of at least one message (M) via a DVB-H channel by the server terminal (1) to at least one communicating mobile terminal (2) is preceded by a step of creation (79) of a file (F) containing all of the messages (M) to be broadcast to the recipients of all of the exchange groups managed by the server terminal (1), the step of transmission (80) of at least one message (M) then comprising broadcasting (83) of this file (F) over a DVB-H channel enabling the broadcasting of all of these messages (M) to the recipients of all of the exchange groups managed by the server terminal (1), the tags (T) incorporated into each of the messages (M) of the file (F) enabling the processing means (22) of the communicating mobile terminals (2) to carry out a step of filtering of the messages (M) in order to present to the users only the message(s) (M) corresponding to the exchange group(s) in which they participate.

17. Method as claimed in any one of Claims 15 and 16, **characterised in that** the step of transmission (80) of at least one message (M) by the server terminal (1) to at least one communicating mobile terminal (2) via at least one channel of the mobile communication network (RT) is followed by the following steps implemented by each of the communicating mobile terminals (2):
- reception (90) of each of the messages (M) by communication means (24) of each of the communicating mobile terminals (2),
- reading of each of the messages (M) by the processing means (22) of each of the communicating mobile terminals (2) and interpretation (91) of the tags (T) contained in these messages (M),
- filtering of the messages (M) by identification (92) of the exchange group with which each of the messages (M) is associated, then, when the identified exchange group corresponds to an exchange group in which the destination communicating mobile terminal (2) participates, formatting (93) of the message (M) according to the tags which it contains.

18. Method as claimed in Claim 17, **characterised in that** the step of formatting (93) of the message (M) according to the tags (T) which it contains is followed by a step of display (95), on display means (21) of the communicating mobile terminal (2), of the message (M) with its formatting defined by the tags (T), then a possible step of recording (94) of the contents of the message (M) in the memory means (23) of the communicating mobile terminal (2) when its user wishes this.

19. Method as claimed in any one of Claims 17 and 18, **characterised in that** the step of recording (94) of the contents of the message (M) in the memory means (23) of the communicating mobile terminal (2) is followed by a step of creation (50) of a message (M), carried out by way of the interpretation (91) of the tags (T) contained in each of the messages (M) corresponding to an exchange group in which the communicating mobile terminal (2) participates, either by input (51) of the text of the message by a user by way of the input means (20) and the display means (21) of the communicating mobile terminal (2) or automatically (42) by the processing means (22) of the communicating mobile terminal (2), by means of the information supplied by the tags (T) contained in the received message.

20. Method as claimed in Claim 19, **characterised in that** the step of creation (50) of a message (M) is followed by a step of incorporation (60) of at least one tag (T) in this message, carried out either automatically (63) by the processing means (22) of the communicating mobile terminal (2) or by a user making a selection (62) by way of the input means (20) of the communicating mobile terminal (2) of at least one tag (T) from amongst a plurality of tags stored in the memory means of the communicating mobile terminal (29) and displayed (61) by way of the display means (21) of the communicating mobile terminal.

21. Method as claimed in any one of Claims 15 to 20, **characterised in that** the steps of transmission (80) via a DVB-H channel of at least one message (M) or of the file (F) are accompanied by broadcasting (84) via the DVB-H channel of a new list of available tags enabling the communicating mobile terminals (2) to implement a step of updating (98) of the plurality of tags stored in their memory means (23).

22. Method as claimed in any one of Claims 1 to 21, **characterised in that** it includes a prior step of installation of an executable application on the processing means (12, 22) of the terminals (1, 2), enabling the carrying out of the different steps of the method and in particular the identification of the tags (T) within the messages (M) exchanged in the exchange groups and the interpretation of these tags (T) by way of the consultation of the memory means (13, 23) of the different terminals (1, 2) storing the different tags (T) associated with functions defining tasks to be executed by the processing means (12, 22) of the terminals (1,2).

23. System for exchange of messages (M) via at least one transmission channel of at least one mobile communication network (RT) between at least one server terminal (1) and at least one communicating mobile terminal (2) of a recipient participating in an exchange group managed by the server (1), the messages (M) containing at least one tag (T) comprising data enabling at least formatting of the message (M), the system being **characterised in that** it includes at least one server terminal (1) and at least one communicating mobile terminal (2) each including:
processing means (12, 22) including:
- means for interpretation of the tags (T) contained in the messages (M) exchanged by the terminals (1, 2) participating in the different exchange groups managed by the server (1),
- means for creation of messages (M),
- means for incorporation of tags (T) into the messages (M) created,
- means for selection of at least one channel to be used for the transmission of the messages (M) to the destination terminals (1, 2) as a function of the number of recipients of the message (M) and parameters relating to these terminals,
• memory means (13, 23) storing a plurality of tags (T) which can be interpreted by the terminals participating in the different exchange groups,
• communication means (14, 24) provided in order to establish communications with other terminals (1, 2, 3) via at least one channel (GSM1, GSM2, DVB1) of at least one communication network (RT, RI) and to exchange messages (M) with these terminals (1, 2, 3).

24. System as claimed in Claim 23, **characterised in that** at least the server terminals (1) includes means for definition of tags enabling on the one hand association of the keywords with at least one character or symbol in such a way as to define tags (T) which can be interpreted by the data processing means (12, 22) of the terminals (1, 2) and on the other hand assignment to these tags (T) of the functions defining the tasks to be executed by the processing means (12, 22) of the terminals (1, 2) during the interpretation of the tags (T), means for recording the server terminal (1) enabling the storage of these tags (T) in the memory means of the server terminal (1), a task to be executed being defined by at least one function from amongst at least the following functions:
- definition of exchange groups comprising services such as games, forums or lotteries in which users of communicating mobile terminals (2) can participate by joining this exchange group,
- definition of formats for formatting messages (M) for the presentation of the content thereof to the users of communicating mobile terminals (2) participating in an exchange group,
- definition of methods of response to the messages (M) received by the users of communicating mobile terminals (2) participating in an exchange group,
- definition of choices associated with at least one function of at least one other tag (T) in order to propose actions to be carried out to the users of communicating mobile terminals (2) participating in an exchange group.

25. System as claimed in any one of Claims 23 and 24, **characterised in that** the means for interpretation of the tags (T) include means for reading data constituting the messages (M) and means for identification of the tags (T) detecting within these messages the data representing the character or symbol with which the tags are associated, in such a way as to identify the tags (T) within the messages (M) exchanged in the exchange groups, means for consultation of the memory means (13, 23) of the different terminals (1, 2) enabling the processing means (12, 22) of these terminals (1, 2) to execute the tasks defined by the functions assigned to the different tags (T).

26. System as claimed in any one of Claims 23 to 25, **characterised in that** the means for incorporation of tags (T) into the created messages (M) include means for conversion of call co-ordinates of the transmitting terminal (1, 2) into at least one tag enabling a response by the recipient.

27. System as claimed in any one of Claims 23 to 26, **characterised in that** the means for creation of messages (M) and the means for incorporation of tags (T) into the messages (M) comprise, in the communicating mobile terminal (2), input means (20) and display means (21) enabling a user transmitting the message (M) to control the processing means (12) of the communicating mobile terminal (2) in order to create at least one message (M) to be sent.

28. System as claimed in any one of Claims 23 to 27, **characterised in that** the means for selection of the channel to be used for the transmission of the message (M) via the mobile communication network (RT) include, in the communicating mobile terminal (92), means for automatic selection of a GSM channel controlling the processing means (22) and the communication means (24) of the communicating mobile terminal (2) in order to send the message (M) to the server terminal (1).

29. System as claimed in any one of Claims 23 to 28, **characterised in that** the processing means (12) of the server terminal (1) include on the one hand means for creation in the memory means (13) of the server terminal (1) of at least one file (G) corresponding to at least one exchange group defined by at least one tag (T) and means for recording in this file (G) all of the messages (M) containing this tag (T) and corresponding to this exchange group.

30. System as claimed in Claim 29, **characterised in that** the processing means (12) of the server terminal (1) include means for conversion of the file (G) into a web page and means for publication of this web page for possible consultation by the users participating in the corresponding exchange group.

31. System as claimed in any one of Claims 23 to 30, **characterised in that** the interpretation means installed in the server terminal (1) automatically control the means for creation of messages (M) and the means for incorporation of tags (T) of the server terminal (1) in order to create an automatic response defined at least by a function assigned to at least one tag (T) incorporated into a message (M) sent by a communicating mobile terminal (2), the execution of at least one task defined by this function resulting in automatic creation of a predefined message associated with the exchange group with which the message (M) sent by the communicating mobile terminal (2) was associated.

32. System as claimed in any one of Claims 23 to 31, **characterised in that** the means for creation of messages (M) and the means for incorporation of tags (T) of the server terminal (1) include input means (10) and display means (11) controlled by a user effecting an input of the text of the message (M) to be sent and a selection from amongst the plurality of tags (T) stored in memory means (13) of the server terminal (1) of at least one tag (T) to be incorporated into the message.

33. System as claimed in any one of Claims 23 to 32, **characterised in that** it includes a content provider terminal (3) including input means (30) and display means (31) enabling a user of this content provider terminal (3) to input the text of the message (M) to be sent.

34. System as claimed in Claim 33, **characterised in that** the content provider terminal (3) includes communication means (34) enabling transmission of the created message (M) to the server terminal (1) via at least one communication network (RI), the processing means (12) of the server terminal (1) enabling the incorporation of at least one tag (T) into the message (M) to be sent to the recipients.

35. System as claimed in Claim 33, **characterised in that** the content provider terminal (3) also includes means for incorporation of tags (T) into the messages (M), the input means (30) and the display means (31) of the content provider terminal (3) enabling the user of the content provider terminal (3) to select at least one tag (T) to be incorporated into the message (M) from amongst a plurality of tags (T) stored in memory means (33) of the content provider terminal and displayed on its display means (31), communication means (34) of the content provider terminal (3) enabling the transmission of the message (M) to the server terminal (1) via at least one communication network (RI).

36. System as claimed in any one of Claims 23 to 35, **characterised in that** the means for selection by the server terminal (1) of the channel to be used for transmission of at least one message (M) to at least one communicating mobile terminal (2) include means for evaluation of the parameters relating to the recipients, for determination of the number of destination terminals, their call co-ordinates and their accessibility within the mobile communication network (RT) and include automatic selection means implementing a predetermined method of selection and enabling, as a function of the result obtained by these evaluation means, a selection of at least one channel from amongst either a DVB-H channel selected when the number of recipients is greater than a number predefined in the method of selection, or a GSM channel selected when the number of recipients is equal to this predefined number, or both a DVB-H channel and at least one GSM channel when the number of recipients is greater than this predefined number but at least one destination communicating mobile terminal (2) participating in the exchange group is incapable of receiving the DVB-H signals broadcast in the zone of influence (DVB₁) of the DVB-H antennas (16) of the mobile communication network (RT).

37. System as claimed in Claim 36, **characterised in that** the server terminal (1) includes means for creation of a file (F) containing all of the messages (M) to be broadcast to the recipients of all of the exchange groups managed by the server terminal (1), and **in that** the communication means (14) of this server terminal (21) include means for broadcasting of this file (F) over a DVB-H channel enabling the broadcasting of all of the messages (M) of the file to all of the communicating mobile terminals (2) participating in the different exchange groups managed by the server terminal (1), the means for interpretation of each of these communicating mobile terminals (2) filtering the different messages (M) of the file (F) in such a way as to present to their user only the messages (M) corresponding to the exchange group in which they participate.

38. System as claimed in any one of Claims 23 to 37, **characterised in that** the interpretation means of the communicating mobile terminal (2) identify the exchange group to which each of the received messages (M) corresponds and format the messages (M) corresponding to at least one exchange group in which the communicating mobile terminal (2) participates, according to the tags contained in these messages, display means (21) of the communicating mobile terminal enabling display of the message (M) with its formatting defined by the tags (T) which it contains and a possible recording of the message (M) in the memory means (23) of the communicating mobile terminal (2) when its user commands this with the aid of the input means (20).

39. System as claimed in any one of Claims 23 to 38, **characterised in that** the interpretation means of the communicating mobile terminal (2) automatically control the means for creation of messages (M) and the means for incorporation of tags (T) of the communicating mobile terminal (2) in order to create an automatic response defined by a function assigned to at least one tag (T) incorporated into a message (M) sent by a server terminal (1), the execution of at least one task defined by this function resulting in automatic creation of a predefined message associated with the exchange group with which the message (M) sent by the server terminal (1) was associated.

40. System as claimed in any one of Claims 23 to 39, **characterised in that** the means for creation of messages (M) and the means for incorporation of tags (T) of the communicating mobile terminal (2) include input means (20) and display means (21) controlled by a user effecting an input of the text of the message (M) to be sent and a selection, from amongst the plurality of tags (T) stored in memory means (23) of the communicating mobile terminal (2), of at least one tag (T) to be incorporated into the message.

41. System as claimed in any one of Claims 23 and 40, **characterised in that** the DVB-H broadcasting means of the server terminal (19) include means for broadcasting of the plurality of tags stored in its memory means (23) enabling the processing means (22) of the communicating mobile terminals (2) to update the plurality of tags stored in their memory means (23).

42. System as claimed in any one of Claims 23 to 41, **characterised in that** the different means of the terminals (1, 2, 3) are implemented by at least one application executed on their processing means (12, 22, 32) by way of the entry in their memory means (13, 23, 33) of data of which at least part is common to the different types of terminals in such a way as to ensure that they are compatible and/or complementary.

## Patentansprüche

1. Verfahren zum Austauschen von Nachrichten (M) über mindestens einen Übertragungskanal von mindestens einem mobilen Kommunikationsnetzwerk (RT) zwischen mindestens einem Server-Endgerät (1) und mindestens einem mobilen Kommunikationsendgerät (2) eines Benutzers, der an einer Austauschgruppe teilnimmt, die von dem Server (1) verwaltet wird, wobei die Nachrichten (M) mindestens ein als Tag bezeichnetes (T) Etikett enthalten, das aus Daten besteht, die zumindest ein Formatieren der Nachricht (M) bei der Interpretation des Tags (T) durch Mittel (12, 22) zur Verarbeitung von Daten der Endgeräte (1, 2) ermöglichen, die die Nachrichten (M) empfangen, **dadurch gekennzeichnet, dass** es die folgenden Schritte aufweist:
- Erstellen (50) von mindestens einer Nachricht (M), die mit Daten verknüpft ist, die für Rufkoordinaten von mindestens einem Empfänger-Endgerät (1, 2) des mobilen Kommunikationsnetzwerks (RT) repräsentativ sind.
- Einfügen (60) von mindestens einem Tag (T) in die Nachricht (M), ausgehend von einer Mehrzahl von vorbestimmten Tags, die in Speichermitteln (13, 23) des Sende-Endgerätes (2, 1) gespeichert sind, wobei mindestens ein derart eingefügter Tag (T) das Identifizieren der Austauschgruppe ermöglicht, mit welcher die Nachricht (M) verknüpft ist,
- Auswählen (70) durch das Sende-Endgerät (2, 1) von mindestens einem für die Übertragung der Nachricht (M) zu verwendenden Kanal aus einer Mehrzahl von in dem mobilen Rommunikationsnetzwerk (RT) verfügbaren Übertragungskanälen in Abhängigkeit von der Anzahl von Empfängern und von auf die Empfänger-Endgeräte (1, 2) bezogenen Parametern,
- Senden (80) der Nachricht (M) über mindestens einen Übertragungskanal von mindestens einem mobilen Kommunikationsnetzwerk (RT).

2. Verfahren gemäß Anspruch 1, **dadurch gekennzeichnet, dass** es einen vorherigen Schritt des Definierens einer Mehrzahl von Tags (T) und des Speicherns in den Speichermitteln (13, 23) der verschiedenen Endgeräte (1, 2) der Tags (T) aufweist, die aus Schlüsselwörtern bestehen, die zumindest innerhalb der Nachrichten (M) mit mindestens einem Zeichen oder Symbol verknüpft sind, das die Identifizierung der Schlüsselwörter als Tags (T) ermöglicht, die von den Mitteln (12, 22) zur Verarbeitung von Daten der Endgeräte (1, 2) interpretiert werden können, die Nachrichten (M) austauschen, in welche die Tags (T) eingefügt werden sollen.

3. Verfahren gemäß Anspruch 2, **dadurch gekennzeichnet, dass** der Schritt des Definierens der Tags (T) mit einem Schritt des Zuordnens von mindestens einer Funktion zu jedem der Tags (T) verknüpft ist, wobei die Interpretation eines Tags (T) zu der Ausführung von mindestens einer Aufgabe führt, die der Funktion entspricht, die ihm aus mindestens einer der folgenden Funktionen zugeordnet wird;
- Definition von Austauschgruppen, die aus Diensten wie zum Beispiel Spielen, Foren oder Gewinnspielen bestehen, an denen die Benutzer von mobilen Kommunikationsendgeräten (2) teilnehmen können, indem sie sich der Austauschgruppe anschließen,
- Definition von Formaten zum Formatieren der Nachrichten (M) für die Präsentation ihres Inhaltes an die Benutzer von mobilen Kommunikationsendgeräten (2), die an einer Austauschgruppe teilnehmen,
- Definition von Verfahren zum Beantworten der Nachrichten, die von den Benutzern von mobilen Kommunikationsendgeräten (2) empfangen werden, die an einer Austauschgruppe teilnehmen.
- Definition von Auswahlen, die mit mindestens einer Funktion von mindestens einem anderen Tag (T) verknüpft sind, zum Vorschlagen von auszuführenden Aktionen an die Benutzer von mobilen Kommunikationsendgeräten (2), die an einer Austauschgruppe teilnehmen.

4. Verfahren gemäß einem der Ansprüche 1 bis 3, **dadurch gekennzeichnet, dass** der Schritt des Einfügens (60) von mindestens einem Tag (T) in die Nachricht (M) einen Schritt des Einfügens von mindestens einem Tag (T) aufweist, der Rufkoordinaten des sendenden Endgerätes (1, 2) entspricht, zum Ermöglichen einer antwort des Empfängers.

5. Verfahren gemäß einem der Ansprüche 1 bis 4, **dadurch gekennzeichnet, dass** die Schritte des Erstellens (50) von mindestens einer Nachricht (M) und des Einfügens (60) von mindestens einem Tag (T) in die Nachricht (M) von einem Benutzer eines mobilen Kommunikationsendgerätes (2) mit Hilfe von Eingabemitteln (20) und Anzeigemitteln (21) des mobilen Kommunikationsendgerätes (2) durchgeführt werden und jeweils bestehen aus einem Schritt des Eingebens (51) des Textes der zu versendenden Nachricht (M) und einem Schritt des Anzeigens (61) einer Mehrzahl von Tags (T), die in Speichermitteln (23) des sendenden mobilen Kommunikationsendgerätes (2) gespeichert sind, gefolgt von einer Auswahl (62) von mindestens einem in die Nachricht einzufügenden Tag (T).

6. Verfahren gemäß Anspruch 5, **dadurch gekennzeichnet, dass** einerseits die auf die Empfänger-Endgeräte bezogenen Parameter mindestens den Rufkoordinaten des Server-Endgerätes (1) entsprechen, und andererseits, dass der Schritt des Auswählens (70) des für die Übertragung der Nachricht (M) über das mobile Kommunikationsnetzwerk (RT) zu verwendenden Kanals aus einer automatischen Auswahl (71) eines GSM-Kanals durch die Verarbeitungsmittel und Kommunikationsmittel (24) des sendenden mobilen Kommunikationsendgerätes besteht, für das Versenden (81) der Nachricht (M) über GSM in Richtung zu dem Server-Endgerät (1).

7. Verfahren gemäß Anspruch 6, **dadurch gekennzeichnet, dass** auf den Schritt des versendens (80) der Nachricht (M) in Richtung zu dem Empfänger-Server-Endgerät (1) über einen GSM-Kanal des mobilen Kommunikationsnetzwerks (RT) die folgenden Schritte folgen, die von dem Server-Endgerät (1) durchgeführt werden:
- Empfangen (90) der Nachricht (M) durch Kommunikationsmittel (14) des Empfänger-Server-Endgerätes (1),
- Auslesen der Nachricht (M) durch die Verarbeitungsmittel (12) des Server-Endgerätes (1) und Interpretation (91) der in der Nachricht (M) enthaltenen Tags (T),
- Identifizieren (92) der Austauschgruppe, der die Nachricht (M) zugeordnet ist, und Formatieren (93) der Nachricht (M) gemäß den Tags, die sie enthält, und anschließend Speichern (94) des Inhaltes der Nachricht (M) in den Speichermitteln (13) des Server-Endgerätes (1).

8. Verfahren gemäß Anspruch 7, **dadurch gekennzeichnet, dass** der Schritt des Speicherns (94) des Inhaltes der Nachricht (M) in den Speichermitteln (13) des Server-Endgerätes (1) aus einem Schritt des Speicherns der Nachricht (M) besteht, die gemäß den Tags (T) formatiert wird, die sie enthält, in einer Datei (G), die die Gesamtheit der in der Austauschgruppe ausgetauschten Nachrichten (M) enthält, die nach dem Identifikationsschritt (92) identifiziert ist.

9. Verfahren gemäß Anspruch 8, **dadurch gekennzeichnet, dass** auf den Schritt des Speicherns (94) der Nachricht (M) in der Datei (G) ein Schritt des Konvertierens (96) der Datei (G) in Norm einer Internetseite und anschließend der Veröffentlichung (97) der Internetseite für einem möglichen Besuch durch die Benutzer folgt, die an der jeweiligen Austauschgruppe teilnehmen.

10. verfahren gemäß Anspruch 7, **dadurch gekennzeichnet, dass** die Schritte des Erstellens (50) der Nachricht und des Einfügens (60) von mindestens einem Tag (T) in die Nachricht (M) automatisch (52, 63) von den Verarbeitungsmitteln (12) des Server-Endgerätes (1) durchgeführt werden, in Antwort auf eine von einem mobilen Kommunikationsendgerät (2) versendete Nachricht (M), mindestens mit Hilfe des Schrittes der Interpretation (91) der Tags (T), die in der Nachricht enthalten sind, und des Schrittes der Identifikation (92) der Austauschgruppe, mit welcher die von dem mobilen Kommunikationsendgerät (2) versendete Nachricht (M) verknüpft war.

11. Verfahren gemäß einem der Ansprüche 1 bis 9, **dadurch gekennzeichnet, dass** die Schritte des Erstellens (50) der Nachricht (M) und des Einfügens (60) von mindestens einem Tag (T) in die Nachricht (M) von einem Benutzer des Server-Endgerätes (1) mit Hilfe von Eingabemitteln (10) und Anzeigemitteln (11) des Server-Endgerätes durchgeführt werden, und dass sie jeweils aus einem Schritt- der Eingabe (51) des Textes der zu versendenden Nachricht (M) und einem Schritt des Anzeigens (61) einer Mehrzahl von Tags (T) bestehen, die in den Speichermitteln (13) des Server-Endgerätes (1) gespeichert sind, gefolgt von einer Auswahl (62) von mindestens einem in die Nachricht einzufügendem Tag (T).

12. Verfahren gemäß einem der Ansprüche 1 bis 9, **dadurch gekennzeichnet, dass** der Schritt des Erstellens (50) der Nachricht (M) von einem Benutzer eines Endgerätes (3) eines Anbieters von Inhalten mit Hilfe von Eingabemitteln (30) und Anzeigemitteln (31) des Endgerätes (3) des Inhaltsanbieters durchgeführt wird und aus einer Eingabe (51) des Textes der zu versendenden Nachricht (M) besteht.

13. Verfahren gemäß Anspruch 12, **dadurch gekennzeichnet, dass** der Schritt des Einfügens (60) von mindestens einem Tag (T) in die an die Empfänger zu versendende Nachricht (M) auch von einem Benutzer des Endgerätes (3) des Inhaltsanbieters mit Hilfe von Eingabemitteln (30) und Anzeigemitteln (31) des Endgerätes (3) des Inhaltsanbieters durchgeführt wird und aus einem Schritt des Anzeigens (61) einer Mehrzahl von Tags (T) besteht, die in Speichermitteln (33) des Endgerätes (3) des Inhaltsanbieters gespeichert sind, gefolgt von einem Schritt der Auswahl (62) von mindestens einem Tag (T), der in die Nachricht (M) eingefügt werden soll, wobei auf diesen ein Schritt des Versendens (55) der Nachricht (M) an das Server-Endgerät (1) über mindestens ein Kommunikationsnetzwerk (RI) mit Hilfe von Kommunikationsmitteln (34) des Endgerätes (3) des Inhaltsanbieters folgt.

14. Verfahren gemäß Anspruch 12, **dadurch gekennzeichnet, dass** auf den Schritt des Erstellens (50) der Nachricht (M), der von einem Benutzer eines Endgerätes (3) des Inhaltsanbieters durchgeführt wird, ein Schritt des Versendens (55) der Nachricht (M) an das Server-Endgerät (1) über mindestens ein Kommunikationsnetzwerk (RI) mit Hilfe von Kommunikationsmitteln (34) des Endgerätes (3) des Inhaltsanbieters folgt, wobei die verarbeitungsmittel (12) des Server-Endgerätes (1) dann automatisch (63) den Schritt des Einfügens (60) von mindestens einem Tag (T) in die Nachricht (M) durchführen, die an die Empfänger gesendet werden soll.

15. Verfahren gemäß einem der Ansprüche 1 bis 14, **dadurch gekennzeichnet, dass** einerseits die auf die Empfänger bezogenen Parameter mindestens den Rufkoordinaten von mindestens einem mobilen Kommunikationsendgerät (2) entsprechen, und dass andererseits der Schritt des Auswählens (70) des für das Versenden (80) der Nachricht (M) in Richtung zu dem mobilen Kommunikationsendgerät über das mobile Kommunikationsnetzwerk (RT) zu verwendenden Kanals automatisch von den Verarbeitungsmitteln (12) des Server-Endgerätes (1), die ein vorbestimmtes Auswahlverfahren implementieren, ausgeführt wird und aus Folgendem besteht: entweder aus einer Auswahl (72) eines DVB-H-Kanals für ein Senden (82) der Nachricht über DVE-H, wenn die Anzahl von Empfängern größer als eine im Auswahlverfahren vordefinierte Anzahl ist, oder aus einer Auswahl (73) eines GSM-Kanals für ein Senden (81) der Nachricht über GSM, wenn die Anzahl von Empfängern der vordefinierten Anzahl entspricht, oder aus einer Auswahl (74) eines DVB-H-Kanals und mindestens eines GSM-Kanals für ein doppeltes Aussenden (81, 82) der Nachricht (M) über DVB-H und GSM, wenn die Anzahl von Empfängern größer als die vordefinierte Anzahl ist, es jedoch mindestens einem mobilen Empfänger-Kommunikationsendgerät, das an der Austauschgruppe teilnimmt, unmöglich ist, die DVB-H-Signale zu empfangen, die in den Einflussbereichen (DVB₁) der DVB-H-Antennen (60) ausgestrahlt werden.

16. Verfahren gemäß Anspruch 15, **dadurch gekennzeichnet, dass** dem Schritt des Versendens (80) von mindestens einer Nachricht (M) über einen DVB-H-Kanal durch das Server-Endgerät (1) in Richtung zu mindestens einem mobilen Kommunikationsendgerät (2) ein Schritt des Erstellens (79) einer Dabei (F) vorangeht, die die Gesamtheit der in Richtung zu den Empfängern der Gesamtheit der von dem Server-Endgerät (1) verwalteten Austauschgruppen auszusendenden Nachrichten (M) enthält, wobei der Schritt des Versendens (80) von mindestens einer Nachricht (M) dann aus einem Aussenden (83) der Datei (F) auf einem DVB-H-Kanal besteht, der das Aussenden der Gesamtheit der Nachrichten (M) in Richtung zu den Empfängern der Gesamtheit der Austauschgruppen ermöglicht, die von dem Server-Endgerät (1) verwaltet werden, wobei die Tags (T), die in jede der Nachrichten (M) der Datei (F) eingefügt werden, den verarbeitungsmitteln (22) der mobilen Kommunikationsendgeräte (2) das Durchführen eines Schrittes des Filterns der Nachrichten (M) ermöglichen, damit den Benutzern nur die Nachricht(en) (M) präsentiert wird (werden), die der (den) Austauschgruppe(n) entspricht (entsprechen), an der (denen) diese teilnehmen.

17. Verfahren gemäß einem der Ansprüche 15 und 16, **dadurch gekennzeichnet, dass** auf den Schritt des Versendens (80) von mindestens einer Nachricht (M) durch das Server-Endgerät (1) in Richtung zu mindestens einem mobilen Kommunikationsendgerät (2) über mindestens einen Kanal des mobilen Kommunikationsnetzwerks (RT) die folgenden Schritte folgen, die von jedem der mobilen Kommunikationsendgeräte (2) durchgeführt werden:
- Empfangen (90) von jeder der Nachrichten (M) durch Kommunikationsmittel (24) von jedem der mobilen Kommunikationsendgeräte (2),
- Auslesen von jeder der Nachrichten (M) durch die Verarbeitungsmittel (22) von jedem der mobilen Kommunikationsendgeräte (2) und Interpretation (91) der Tags (T), die in den Nachrichten (M) enthalten sind,
- Filtern der Nachrichten (M) durch Identifikation (92) der Austauschgruppe, welcher jede der Nachrichten (M) zugeordnet ist, und anschließend, wenn die identifizierte Austauschgruppe einer Austauschgruppe entspricht, an der das mobile Empfänger-Kommunikationsendgerät (2) teilnimmt, Formatieren (93) der Nachricht gemäß den Tags, die sie enthält.

18. Verfahren gemäß Anspruch 17, **dadurch gekennzeichnet, dass** auf den Schritt der Formatierung (93) der Nachricht (M) gemäß den Tags (T), die sie enthält, ein Schritt des Anzeigens (95) auf den Anzeigemitteln (21) des mobilen Kommunikationsendgerätes (2) der Nachricht (M) mit ihrer durch die Tags (T) definierten Formatierung, und dann ein möglicher Schritt des Speicherns (94) des Inhaltes der Nachricht (M) in den Speichermitteln (23) des mobilen Kommunikationsendgerätes (2) folgt, wenn dessen Benutzer dies wünscht.

19. Verfahren gemäß einem der Ansprüche 17 und 18, **dadurch gekennzeichnet, dass** auf den Schritt des Speichern (94) des Inhalts der Nachricht (M) in den Speichermitteln (23) des mobilen Kommunikationsendgerätes (2) ein Schritt des Erstellens (50) einer Nachricht (M) folgt, der durchgeführt wird mit Hilfe der Interpretation (91) der Tags (T), die in jeder der Nachrichten (M) enthalten sind, die einer Austauschgruppe entsprechen, an denen das mobile Kommunikationsendgerät (2) teilnimmt, entweder durch Eingabe (51) des Textes der Nachricht durch einen Benutzer mit Hilfe der Eingabemittel (20) und der Anzeigemittel (21) des mobilen Kommunikationsendgerätes (2) oder auf automatische Weise (52) durch die Verarbeitungsmittel (22) des mobilen Kommunikationsendgerätes (2) mit Hilfe der Informationen, die von den Tags (T) bereitgestellt werden, die in der empfangenden Nachricht enthalten sind.

20. Verfahren gemäß Anspruch 19, **dadurch gekennzeichnet, dass** auf den Schritt des Erstellens (50) einer Nachricht (M) ein Schritt des Einfügens (60) von mindestens einem Tag (T) in die Nachricht folgt, der entweder auf automatische Weise (63) von den Verarbeitungsmitteln (22) des mobilen Komnunikationsendgerätes (2) durchgeführt wird, oder von einem Benutzer, der mit Hilfe der Eingabemittel (20) des mobilen Kommunikationsendgerätes (2) eine Auswahl (62) von mindestens einem Tag (T) aus einer Mehrzahl von Tags ausführt, die in den Speichermitteln des mobilen Kommunikationsendgerätes (2) gespeichert sind und mit Hilfe der Anzeigemittel (21) des mobilen Kommunikationsendgerätes (2) angezeigt werden (61).

21. Verfahren gemäß einem der Ansprüche 15 bis 20, **dadurch gekennzeichnet, dass** die Schritte des Versendens (80) über einen DVB-H-Kanal von mindestens einer Nachricht (M) oder der Datei (F) begleitet werden von einem Aussenden (84) über den DVB-H-Kanal einer neuen Liste von verfügbaren Tags, wodurch es den mobilen Kommunikationsendgeräten (2) ermöglicht wird, einen Schritt des Aktualisierens (98) der Mehrzahl von Tags durchzuführen, die in ihren Speichermitteln (23) gespeichert sind.

22. Verfahren gemäß einem der Ansprüche 1 bis 21, **dadurch gekennzeichnet, dass** es einen vorherigen Schritt der Installation einer auf den Verarbeitungsmitteln (12, 22) der mobilen Endgeräte (1, 2) ausführbaren Anwendung aufweist, die das Durchführen der verschiedenen Schritte des Verfahrens und insbesondere die Identifizierung der Tags (T) in den Nachrichten (M), die in den Austauschgruppen ausgetauscht werden, sowie die Interpretation der Tags (T) mit Hilfe des Hinzuziehens der Speichermittel (13, 23) der verschiedenen Endgeräte (1, 2) ermöglicht, die die verschiedenen Tags (T) speichern, die mit Funktionen verknüpft sind, die die von den Verarbeitungsmitteln (12, 22) der Endgeräte (1, 2) auszuführenden Aufgaben definieren.

23. System zum Austauschen von Nachrichten (M) über mindestens einen Übertragungskanal von mindestens einem mobilen Kommunikationsnetzwerk (RT) zwischen mindestens einem Server-Endgerät (1) und mindestens einem mobilen Kommunikationsendgerät (2) eines Empfängers, das an einer Austauschgruppe teilnimmt, die von dem Server (1) verwaltet wird, wobei die Nachrichten (M) mindestens ein Etikett (T) enthalten, das als Tag bezeichnet wird, das aus Daten besteht, die mindestens ein Formatieren der Nachricht (M) ermöglichen, wobei das System **dadurch gekennzeichnet ist, dass** es mindestens ein Server-Endgerät (1) und mindestens ein mobiles Kommunikationsendgeräte (2) aufweist, die jeweils aufweisen:
• Verarbeitungsmittel (12, 22), aufweisend:
- Mittel zur Interpretation der Tags (T), die in den Nachrichten (M) enthalten sind, die von den Endgeräten (1, 2) ausgetauscht werden, die an den verschiedenen Austauschgruppen teilnehmen, die von dem Server (1) verwaltet werden,
- Mittel zur Erstellung von Nachrichten (M),
- Mittel zum Einfügen von Tags (T) in die erstellten Nachrichten (M),
- Mittel zur Auswahl von mindestens einem Kanal, der für die Übertragung der Nachrichten (M) in Richtung zu den Empfänger-Endgeräten (1, 2) zu verwenden ist, in Abhängigkeit von der Anzahl von Empfängern der Nachricht (M) und von Parametern, die die Endgeräte betreffen,
• Speichermittel (13, 23), die eine Mehrzahl von Tags (T) speichern, die von den Endgeräten interpretierbar sind, die an den verschiedenen Austauschgruppen teilnehmen,
• Kommunikationsmittel (14, 24), die angeordnet sind zum Erstellen von Verbindungen mit anderen Endgeräten (1, 2, 3) über mindestens einen Kanal (GSM1, GSM2, DVB1) von mindestens einem Kommunikationsnetzwerk (RT, RI) und zum Austauschen der Nachrichten (M) mit den Endgeräten (1, 2, 3).

24. System gemäß Anspruch 23, **dadurch gekennzeichnet, dass** mindestens das Server-Endgerät (1) Mittel zur Definition von Tags aufweist, die ermöglichen: einerseits das Verknüpfen der Schlüsselwörter mit mindestens einem Zeichen oder Symbol, so dass Tags (T) definiert werden, die von den Mitteln (12, 22) zur Verarbeitung von Daten der Endgeräte (1, 2) interpretierbar sind, und andererseits das Zuweisen der Funktionen zu den Tags (T), die Aufgabe definieren, die von den Verarbeitungsmitteln (12, 22) der Endgeräte (1, 2) bei der Interpretation der Tags (T) auszuführen sind, wobei Speichermittel des Server-Endgerätes (1) das Speichern der Tags (T) in den Speichermitteln des Server-Endgerätes (1) ermöglichen, wobei eine auszuführende Aufgabe durch mindestens eine Funktion aus mindestens den folgenden Funktionen definiert wird:
- Definition von Austauschgruppen, bestehend aus Diensten, wie zum Beispiel Spielen, Foren oder Gewinnspielen, an denen Benutzer von mobilen Kommunikationsendgeräten (2) teilnehmen können, indem sie sich der Austauschgruppe anschließen,
- Definition von Formaten zum Formatieren der Nachrichten (M) für die Präsentation ihres Inhaltes an die Benutzer von mobilen Kommunikationsendgeräten (2), die an einer Austauschgruppe teilnehmen,
- Definition von Verfahren zur Beantwortung der von den Benutzern von an einer Austauschgruppe teilnehmenden mobilen Kommunikationsendgeräten (2) empfangenen Nachrichten (M),
- Definition von Auswahlen, die mit mindestens einer Funktion von mindestens einem anderen Tag (T) verknüpft sind, zum Vorschlagen von auszuführenden Aktionen an die Benutzer von mobilen Kommunikationsendgeräten (2), die an einer Austauschgruppe teilnehmen.

25. System gemäß einem der Ansprüche 23 und 24, **dadurch gekennzeichnet, dass** die Mittel zur Interpretation der Tags (T) aufweisen: Mittel zum Auslesen der grundlegenden Daten der Nachrichten (M) und Mittel zum Identifizieren der Tags (T), die in den Nachrichten die Daten detektieren, die für das Zeichen oder Symbol repräsentativ sind, mit dem die Tags verknüpft sind, so dass die Tags (T) in Nachrichten (M), die in den Austauschgruppen ausgetauscht werden, identifiziert werden, wobei Mittel zum Hinzuziehen der Speichermittel (13, 23) der verschiedenen Endgeräte (1, 2) den verarbeitungsmitteln (12, 22) der Endgeräte (1, 2) das Ausführen der Aufgaben ermöglichen, die durch die Funktionen definiert sind, die den verschiedenen Tags (T) zugewiesen sind.

26. System gemäß einem der Ansprüche 23 bis 25, **dadurch gekennzeichnet, dass** die Mittel zum Einfügen von Tags (T) in die erstellten Nachrichten (M) Mittel zum Konvertieren von Rufkoordinaten des sendenden Endgerätes (1,2) in mindestens einen Tag aufweisen, der eine Antwort des Empfänger ermöglicht.

27. System gemäß einem der Ansprüche 23 bis 26, **dadurch gekennzeichnet, dass** die Mittel zum Erstellen von Nachrichten (M) und die Mittel zum Einfügen von Tags (T) in die Nachrichten (M) in dem mobilen Kommunikationsendgerät (2) aus Eingabemitteln (20) und Anzeigemitteln (21) bestehen, die einem Benutzer, dem Sender der Nachricht (M), das Steuern der Verarbeitungsmittel (12) des mobilen Kommunikationsendgerätes (2) zum Erstellen von mindestens einer zu versendenden Nachricht (M) ermöglichen.

28. System gemäß einem der Ansprüche 23 bis 27, **dadurch gekennzeichnet, dass** die Mittel zur Auswahl des für die Übertragung der Nachricht (M) über das mobile Kommunikationsnetzwerk (RT) zu verwendenden Kanals in dem mobilen Kommunikationsendgerät (2) Mittel zur automatischen Auswahl eines GSM-Kanals aufweisen, die die verarbeitungsmittel (22) und die Kommunikationsmittel (24) des mobilen Kommunikationsendgerätes (21) zum Senden der Nachricht (M) in Richtung zu dem Server-Endgerät (1) steuern.

29. System gemäß einem der Ansprüche 23 bis 28, **dadurch gekennzeichnet, dass** die Verarbeitungsmittel (12) des Server-Endgerätes (1) aufweisen: Mittel zum Bilden von mindestens einer Datei (G) in den Speichermitteln (13) des Server-Terminals (1), die mindestens einer Austauschgruppe entspricht, welche durch mindestens einen Tag definiert ist, und Mittel zum Speichern in der Datei (G) der Gesamtheit der Nachrichten (M), die den Tag (T) enthalten und der Austauschgruppe entsprechen.

30. Verfahren gemäß Anspruch 29, **dadurch gekennzeichnet, dass** die Verarbeitungsmittel (12) des Server-Endgerätes (1) aufweisen: Mittel zur Konvertierung der Datei (G) in eine Internetseite und Mittel zur Veröffentlichung der Internetseite für einen möglichen Besuch durch die Benutzer, die an der entsprechenden Austauschgruppe teilnehmen.

31. System gemäß einem der Ansprüche 23 bis 30, **dadurch gekennzeichnet, dass** die in dem Server-Terminal (1) installierten Interpretationsmittel automatisch die Mittel zum Erstellen von Nachrichten (M) und die Mittel zum Einfügen von Tags (T) des Server-Terminals (1) steuern, zum Erstellen einer automatischen Antwort, die mindestens durch eine Funktion definiert wird, die mindestens einem Tag (T) zugeordnet ist, der in einer Nachricht (M) enthalten ist, die von einem mobilen Kommunikationsendgerät (2) ausgesendet wird, wobei die Ausführung von mindestens einer durch diese Funktion definierten Aufgabe zu einer automatischen Erstellung einer vordefinierten Nachricht führt, die mit der Austauschgruppe verknüpft ist, mit der die Nachricht (M), die von dem mobilen Kommunikationsendgerät (2) versendet wurde, verknüpft war.

32. System gemäß einem der Ansprüche 23 bis 31, **dadurch gekennzeichnet, dass** die Mittel zum Erstellen von Nachrichten (M) und die Mittel zum Einfügen von Tags (T) des Server-Endgerätes (1) Eingabemittel (10) und Anzeigemittel (11) aufweisen, die von einem Benutzer gesteuert werden, der eine Eingabe des Textes der zu versendenden Nachricht (M) und eine Auswahl von mindestens einem in die Nachricht einzufügendem Tag (T) aus der Mehrzahl von in den Speichermitteln (13) des Server-Endgerätes (1) gespeicherten Tags (T) ausführt.

33. System gemäß einem der Ansprüche 23 bis 32, **dadurch gekennzeichnet, dass** es ein Endgerät (3) eines Inhaltsanbieters aufweist, welches Eingabemittel (30) und Anzeigemittel (21) aufweist, die einem Benutzer des Endgerätes (3) des Inhaltsanbieters das Eingeben des Textes der zu versendenden Nachricht (M) ermöglichen.

34. System gemäß Anspruch 33, **dadurch gekennzeichnet, dass** das Endgerät (3) des Inhaltsanbieters Kommunikationsmittel (34) aufweist, die das Versenden der erstellten Nachricht (M) an das Server-Endgerät (1) über mindestens ein Kommunikationsnetzwerk (RI) ermöglichen, wobei die Verarbeitungsmittel (12) des Server-Endgerätes (1) das Einfügen von mindestens einem Tag (T) in die an die Empfänger zu sendende Nachricht (M) ermöglichen.

35. System gemäß Anspruch 33, **dadurch gekennzeichnet, dass** das Endgerät (3) des Inhaltsanbieters auch Mittel zum Einfügen von Tags (T) in die Nachrichten (M) aufweist, wobei die Eingabemittel (30) und die Anzeigemittel (31) des Endgerätes (3) des Inhaltsanbieters dem Benutzer des Endgerätes (3) des Inhaltsanbieters das Auswählen von mindestens einem in die Nachricht (M) einzufügendem Tag (T) aus einer Mehrzahl von Tags (T) ermöglichen, die in Speichermitteln (33) des Endgerätes des Inhaltsanbieters gespeichert sind und auf seinen Anzeigemitteln (31) angezeigt werden, wobei Kommunikationsmittel (34) des Endgerätes (3) des Snhaltsanbieters das Senden der Nachricht (M) an das Server-Endgerät (1) über mindestens ein Kommunikationsnetzwerk (RI) ermöglichen.

36. System gemäß einem der Ansprüche 23 bis 35, **dadurch gekennzeichnet, dass** die Mittel zur Auswahl des Kanals durch das Server-Endgerät (1), der für das Senden von mindestens einer Nachricht (M) in Richtung zu mindestens einem mobilen Kommunikationsendgerät (2) zu verwenden ist, aufweisen: Mittel zur Auswertung der auf die Empfänger bezogenen Parameter, zum Bestimmen der Anzahl von Empfänger-Endgeräten, ihren Rufkoordinaten und ihrer Zugänglichkeit innerhalb des mobilen Kommunikationsnetzwerks (RT), und Mittel zur automatischen Auswahl, die ein vorbestimmtes Auswahlverfahren implementieren und in Abhängigkeit von dem durch die Evaluationsmittel erhaltenen Ergebnis eine Auswahl von mindestens einem Kanal ermöglichen, aus entweder einem DVB-H-Kanal, der ausgewählt wird, wenn die Anzahl von Empfängern größer als eine in dem Auswahlverfahren vordefinierte Anzahl ist, oder einem GSM-Kanal, der ausgewählt wird, wenn die Anzahl von Empfängern der vordefinierten Anzahl entspricht, oder gleichzeitig einem DVB-H-Kanal und mindestens einem GSM-Kanal, wenn die Anzahl von Empfängern größer als die vordefinierte Anzahl ist, wobei jedoch mindestens ein mobiles Empfänger-Kommunikationsendgerät (2), das an der Austauschgruppe teilnimmt, nicht in der Lage ist, die in den Einflussbereichen (DVB₁) von DVB-H-Antennen (16) des mobilen Kommunikationsnetzwerks (RT) ausgestrahlten DVB-H-Signale zu empfangen.

37. System gemäß Anspruch 36, **dadurch gekennzeichnet, dass** das Server-Endgerät (1) Mittel aufweist zum Erstellen einer Datei (F), die die Gesamtheit der Nachrichten (M) enthält, die in Richtung zu den Empfängern der Gesamtheit der von dem Server-Endgerät (1) verwalteten Austauschgruppen auszusenden sind, und **dadurch**, dass die Kommunikationsmittel (14) des Server-Endgerätes (21) Mittel aufweisen zum Aussenden der Datei (F) auf einem DVB-H-Kanal, wodurch das Aussenden der Gesamtheit der Nachrichten (M) der Datei in Richtung zu der Gesamtheit der mobilen Kommunikationsendgeräte (2) ermöglicht wird, die an den verschiedenen Austauschgruppen teilnehmen, die von dem Server-Endgerät (1) verwaltet werden, wobei die Mittel zur Interpretation von jedem der mobilen Kommunikationsendgeräte (2) die verschiedenen Nachrichten (M) der Datei (F) filtern, so dass ihrem Benutzer nur die Nachrichten (M) präsentiert werden, die der Austauschgruppe entsprechen, an welcher er teilnimmt.

38. System gemäß einem der Ansprüche 23 bis 37, **dadurch gekennzeichnet, dass** die Mittel zur Interpretation des mobilen Kommunikationsendgerätes (2) die Austauschgruppe identifizieren, der jede der empfangenen Nachrichten (M) entspricht, und dass sie die Nachrichten (M), die mindestens einer Austauschgruppe entsprechen, an der das mobile Kommunikationsendgerät (2) teilnimmt, gemäß den in diesen Nachrichten enthaltenen Tags formatieren, wobei Anzeigemittel (21) des mobilen Kommunikationsendgerätes (2) ein Anzeigen der Nachricht (M) mit ihrer Formatierung, die durch die Tags (T) definiert wird, die sie enthält, und ein mögliches Speichern der Nachricht (M) in den Speichermitteln (23) des mobilen Kommunikationsendgerätes (2) ermöglichen, wenn der Benutzer hierfür mit Hilfe der Eingabemittel (20) den Befehl erteilt.

39. System gemäß einem der Ansprüche 23 bis 38, **dadurch gekennzeichnet, dass** die Interpretationsmittel des mobilen Kommunikationsendgerätes automatisch die Mittel zur Erstellung von Nachrichten (M) und die Mittel zum Einfügen von Tags (T) des mobilen Kommunikationsendgerätes (2) steuern, zum Erstellen einer automatischen Antwort, die durch eine Funktion definiert wird, die mindestens einem Tag (T) zugeordnet ist, der in eine Nachricht (M) eingefügt ist, die von einem Server-Endgerät (1) gesendet wird, wobei das Ausführen von mindestens einer durch diese Funktion definierten Aufgabe zu einer automatischen Erstellung einer vordefinierten Nachricht führt, die mit der Austauchgruppe verknüpft ist, mit welcher die durch das Server-Endgerät (1) gesendete Nachricht (M) verknüpft war.

40. System gemäß einem der Ansprüche 23 bis 39, **dadurch gekennzeichnet, dass** die Mittel zum Erstellen von Nachrichten (M) und die Mittel zum Einfügen von Tags (T) des mobilen Kommunikationsendgerätes (2) Eingabemittel (20) und Anzeigemittel (21) aufweisen, die von einem Benutzer gesteuert werden, der eine Eingabe des Textes der Nachricht (M), die gesendet werden soll, und eine Auswahl von mindestens einem in die Nachricht einzufügendem Tag (T) aus der Mehrzahl von Tags (T) durchführt, die in den Speichermitteln (23) des mobilen Kommunikationsendgerätes (2) gespeichert sind.

41. System gemäß einem der Ansprüche 23 bis 40, **dadurch gekennzeichnet, dass** die Mittel des Server-Endgerätes (1) zum Aussenden mittels DVB-H Mittel aufweisen zum Aussenden der Mehrzahl von Tags, die in seinen Speichermitteln (23) gespeichert sind, wodurch den Verarbeitungsmitteln (22) der mobilen Kommunikationsendgeräte (2) das Aktualisieren der Mehrzahl von Tags ermöglicht wird, die in ihren Speichermitteln (23) gespeichert sind.

42. System gemäß einem der Ansprüche 23 bis 41, **dadurch gekennzeichnet, dass** die verschiedenen Mittel der Endgeräte (1, 2, 3) von mindestens einer Anwendung implementiert werden, die auf ihren Verarbeitungsmitteln (12, 22, 32) mit Hilfe des Speicherns von Daten in ihren Speichermitteln (13, 23, 33) ausgeführt wird, von denen zumindest ein Teil den verschiedenen Endgerätetypen gemeinsam ist, so dass ihre Kompatibilität und/oder ihre Komplementarität sichergestellt wird.
